# EUROPEAN PATENT SPECIFICATION

(11) **EP 3 142 454 B1**
(45) Date of publication and mention of the grant of the patent: **04.09.2019**
(21) Application number: 15789698.6
(22) Date of filing: 04.05.2015
(51) Int. Cl.: H04W 36/00, H04W 76/34, H04W 36/16

(54) **METHOD FOR PROCESSING CSFB OR SRVCC DURING SIPTO SERVICE**
VERFAHREN ZUR VERARBEITUNG VON CSFB ODER SRVCC WÄHREND DES SIPTO-DIENSTES
PROCÉDÉ POUR TRAITER CSFB OU SRVCC PENDANT UN SERVICE SIPTO

(30) Priority: 05.05.2014 US 201461988870 P; 05.05.2014 US 201461988883 P
(43) Date of publication of application: 15.03.2017
(73) Proprietor: LG Electronics Inc., Seoul 07336 (KR)
(72) Inventor: KIM, Laeyoung, Seoul 137-893 (KR); RYU, Jinsook, Seoul 137-893 (KR); KIM, Hyunsook, Seoul 137-893 (KR); KIM, Jaehyun, Seoul 137-893 (KR); KIM, Taehun, Seoul 137-893 (KR)
(74) Representative: Cabinet Plasseraud
(86) International application number: PCT/KR2015/004459
(87) International publication number: WO 2015/170858

(56) References cited:
- WO-A1-2012/050842
- WO-A1-2013/036079
- WO-A1-2013/151333
- KR-A- 20130 079 564
- US-A1- 2011 170 517
- "3rd Generation Partnership Project; Technical Specification Group SA Study on Co-ordinated PGW change for Selected IP Traffic Offload (CSIPTO) (Release 13)", 3GPP STANDARD; 3GPP TR 22.828, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V1.0.0, 27 February 2014 (2014-02-27), pages 1-18, XP050769538, [retrieved on 2014-02-27]
- "3rd Generation Partnership Project; Technical Specification Group Services and System Aspects; Single Radio Voice Call Continuity (SRVCC); Stage 2 (Release 12)", 3GPP STANDARD; 3GPP TS 23.216, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 13 December 2013 (2013-12-13), pages 1-69, XP050728765, [retrieved on 2013-12-13]
- INTEL ET AL: "CSIPTO for Non-IMS Services", 3GPP DRAFT; S1-135029 CSIPTO FOR NON-IMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. San Francisco, USA; 20131111 - 20131115 12 November 2013 (2013-11-12), XP050743045, Retrieved from the Internet: URL:http://www.3gpp.org/ftp/Meetings_3GPP_ SYNC/SA/SA1/Docs/ [retrieved on 2013-11-12]
- ERICSSON: "Consideration on CSIPTO complexity and suggested conclusion", 3GPP DRAFT; S1-141187, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. Sapporo, Japan; 20140512 - 20140516 2 May 2014 (2014-05-02), XP050834078, Retrieved from the Internet: URL:http://www.3gpp.org/ftp/tsg_sa/WG1_Ser v/TSGS1_66_Sapporo/docs/ [retrieved on 2014-05-02]
- NEC: 'Enabling UEs to support multiple PDN connections (subject to SIPTO) to the same APN to optimize PDN connections during active mode mobility' 3GPP TSG SA WG2 MEETING #79 04 May 2010, KYOTO, JAPAN, pages 2 - 102296, XP050434491

## Description

### BACKGROUND OF THE INVENTION

### Field of the invention

The present invention relates to a mobile communication.

### Related Art

In 3GPP in which technical standards for mobile communication systems are established, in order to handle 4th generation communication and several related forums and new technologies, research on Long Term Evolution/System Architecture Evolution (LTE/SAE) technology has started as part of efforts to optimize and improve the performance of 3GPP technologies from the end of the year 2004

SAE that has been performed based on 3GPP SA WG2 is research regarding network technology that aims to determine the structure of a network and to support mobility between heterogeneous networks in line with an LTE task of a 3GPP TSG RAN and is one of recent important standardization issues of 3GPP. SAE is a task for developing a 3GPP system into a system that supports various radio access technologies based on an IP, and the task has been carried out for the purpose of an optimized packet-based system which minimizes transmission delay with a more improved data transmission capability.

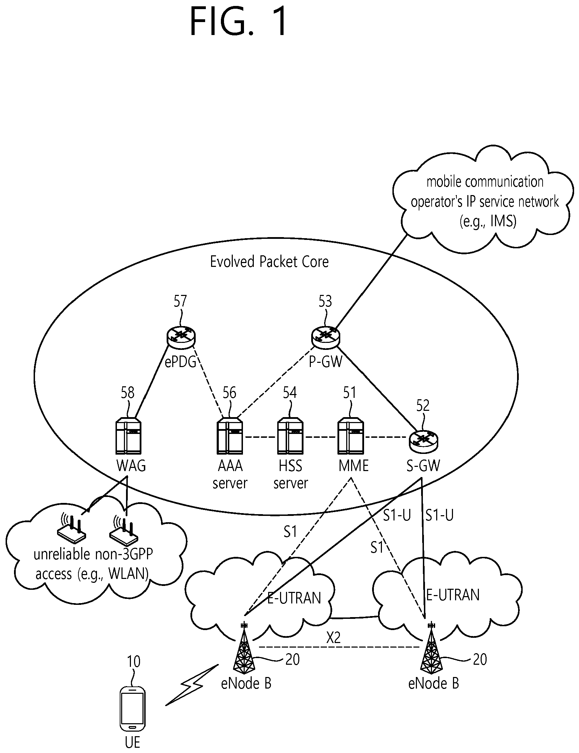

An Evolved Packet System (EPS) higher level reference model defined in 3GPP SA WG2 includes a non-roaming case and roaming cases having various scenarios, and for details therefor, reference can be made to 3GPP standard documents TS 23.401 and TS 23.402. A network configuration of FIG. 1 has been briefly reconfigured from the EPS higher level reference model.

FIG. 1 shows the configuration of an evolved mobile communication network.

An Evolved Packet Core (EPC) may include various elements. FIG. 1 illustrates a Serving Gateway (S-GW) 52, a Packet Data Network Gateway (PDN GW) 53, a Mobility Management Entity (MME) 51, a Serving General Packet Radio Service (GPRS) Supporting Node (SGSN), and an enhanced Packet Data Gateway (ePDG) that correspond to some of the various elements.

The S-GW 52 is an element that operates at a boundary point between a Radio Access Network (RAN) and a core network and has a function of maintaining a data path between an eNodeB 22 and the PDN GW 53. Furthermore, if a terminal (or User Equipment (UE) moves in a region in which service is provided by the eNodeB 22, the S-GW 52 plays a role of a local mobility anchor point. That is, for mobility within an E-UTRAN (i.e., a Universal Mobile Telecommunications System (Evolved-UMTS) Terrestrial Radio Access Network defined after 3GPP release-8), packets can be routed through the S-GW 52. Furthermore, the S-GW 52 may play a role of an anchor point for mobility with another 3GPP network (i.e., a RAN defined prior to 3GPP release-8, for example, a UTRAN or Global System for Mobile communication (GSM) (GERAN)/Enhanced Data rates for Global Evolution (EDGE) Radio Access Network).

The PDN GW (or P-GW) 53 corresponds to the termination point of a data interface toward a packet data network. The PDN GW 53 can support policy enforcement features, packet filtering, charging support, etc. Furthermore, the PDN GW (or P-GW) 53 can play a role of an anchor point for mobility management with a 3GPP network and a non-3GPP network (e.g., an unreliable network, such as an Interworking Wireless Local Area Network (I-WLAN), a Code Division Multiple Access (CDMA) network, or a reliable network, such as WiMax).

In the network configuration of FIG. 1, the S-GW 52 and the PDN GW 53 have been illustrated as being separate gateways, but the two gateways may be implemented in accordance with a single gateway configuration option.

The MME 51 is an element for performing the access of a terminal to a network connection and signaling and control functions for supporting the allocation, tracking, paging, roaming, handover, etc. of network resources. The MME 51 controls control plane functions related to subscribers and session management. The MME 51 manages numerous eNodeBs 22 and performs conventional signaling for selecting a gateway for handover to another 2G/3G networks. Furthermore, the MME 51 performs functions, such as security procedures, terminal-to-network session handling, and idle terminal location management.

The SGSN handles all packet data, such as a user's mobility management and authentication for different access 3GPP networks (e.g., a GPRS network and an UTRAN/GERAN).

The ePDG plays a role of a security node for an unreliable non-3GPP network (e.g., an I-WLAN and a Wi-Fi hotspot).

As described with reference to FIG. 1, a terminal (or UE) having an IP capability can access an IP service network (e.g., IMS), provided by a service provider (i.e., an operator), via various elements within an EPC based on non-3GPP access as well as based on 3GPP access.

Furthermore, FIG. 1 shows various reference points (e.g., S1-U and S1-MME). In a 3GPP system, a conceptual link that connects two functions that are present in the different function entities of an E-UTRAN and an EPC is called a reference point. Table 1 below defines reference points shown in FIG. 1. In addition to the reference points shown in the example of Table 1, various reference points may be present depending on a network configuration.

**[Table 1]**

| REFERENCE POINT | DESCRIPTION |
|---|---|
| S1-MME | A reference point for a control plane protocol between the E-UTRAN and the MME |
| S1-U | A reference point between the E-UTRAN and the S-GW for path switching between eNodeBs during handover and user plane tunneling per bearer |
| S3 | A reference point between the MME and the SGSN that provides the exchange of pieces of user and bearer information for mobility between 3GPP access networks in idle and/or activation state. This reference point can be used intra-PLMN or inter-PLMN (e.g. in the case of Inter-PLMN HO). |
| S4 | A reference point between the SGW and the SGSN that provides related control and mobility support between the 3GPP anchor functions of a GPRS core and the S-GW. Furthermore, if a direct tunnel is not established, the reference point provides user plane tunneling. |
| S5 | A reference point that provides user plane tunneling and tunnel management between the S-GW and the PDN GW. The reference point is used for S-GW relocation due to UE mobility and if the S-GW needs to connect to a non-collocated PDN GW for required PDN connectivity |
| S11 | A reference point between the MME and the S-GW |
| SGi | A reference point between the PDN GW and the PDN. The PDN may be a public or private PDN external to an operator or may be an intra-operator PDN, e.g., for the providing of IMS services. This reference point corresponds to Gi for 3GPP access. |

Among the reference points shown in FIG. 1, S2a and S2b correspond to non-3GPP interfaces. S2a is a reference point providing the user plane with related control and mobility support between a PDN GW and a reliable non-3GPP access. S2b is a reference point providing the user plane with mobility support and related control between a PDN GW and an ePDG.

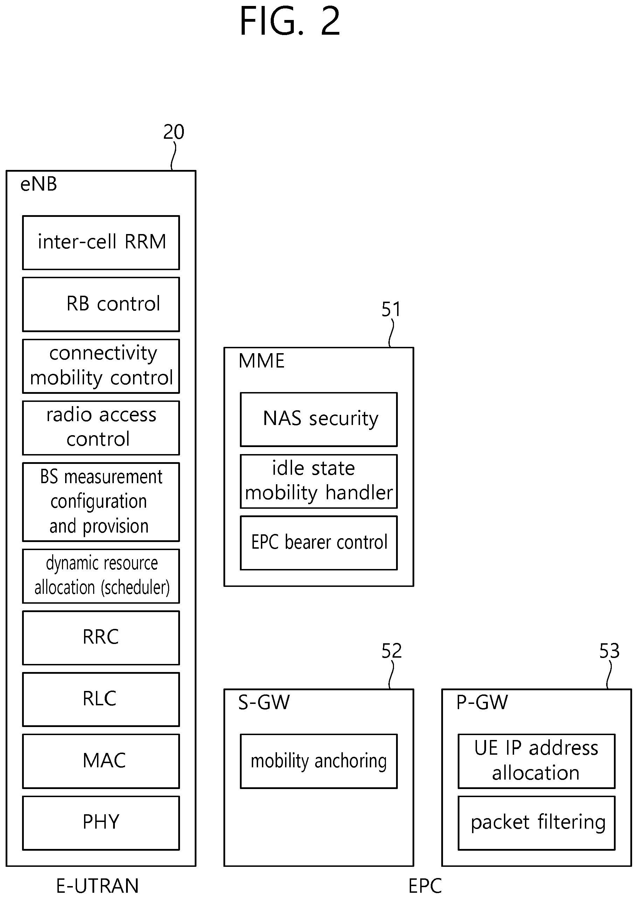

FIG. 2 is an exemplary diagram showing the architecture of a common E-UTRAN and a common EPC.

As shown in FIG. 2, the eNodeB 20 can perform functions, such as routing to a gateway while RRC connection is activated, the scheduling and transmission of a paging message, the scheduling and transmission of a broadcast channel (BCH), the dynamic allocation of resources to UE in uplink and downlink, a configuration and providing for the measurement of the eNodeB 20, control of a radio bearer, radio admission control, and connection mobility control. The EPC can perform functions, such as the generation of paging, the management of an LTE_IDLE state, the ciphering of a user plane, control of an EPS bearer, the ciphering of NAS signaling, and integrity protection.

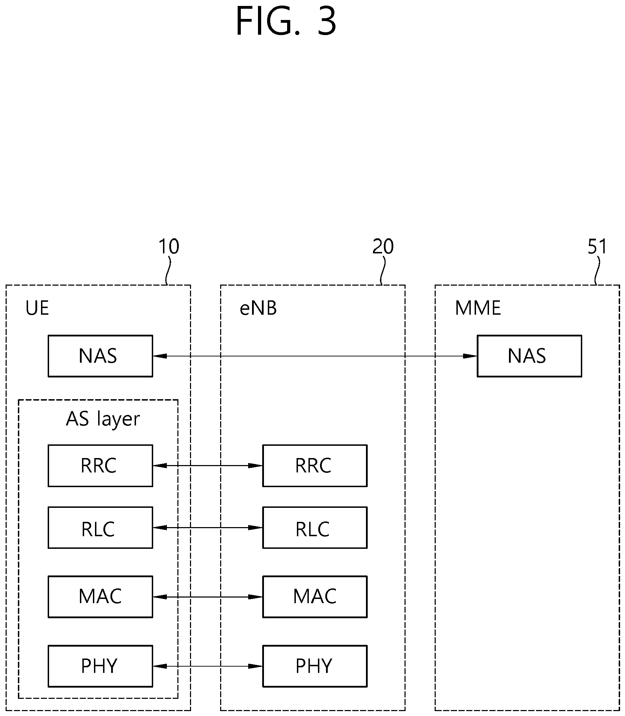

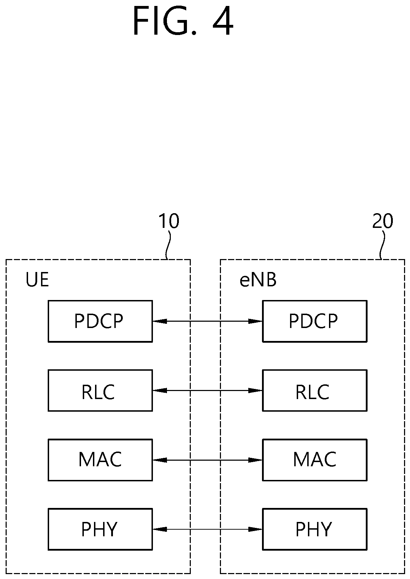

FIG. 3 is an exemplary diagram showing the structure of a radio interface protocol in a control plane between UE and an eNodeB, and FIG. 4 is another exemplary diagram showing the structure of a radio interface protocol in a control plane between UE and an eNodeB.

The radio interface protocol is based on a 3GPP radio access network standard. The radio interface protocol includes a physical layer, a data link layer, and a network layer horizontally, and it is divided into a user plane for the transmission of information and a control plane for the transfer of a control signal (or signaling).

The protocol layers may be classified into a first layer (LI), a second layer (L2), and a third layer (L3) based on three lower layers of the Open System Interconnection (OSI) reference model that is widely known in communication systems.

The layers of the radio protocol of the control plane shown in FIG. 3 and the radio protocol in the user plane of FIG. 4 are described below.

The physical layer PHY, that is, the first layer, provides information transfer service using physical channels. The PHY layer is connected to a Medium Access Control (MAC) layer placed in a higher layer through a transport channel, and data is transferred between the MAC layer and the PHY layer through the transport channel. Furthermore, data is transferred between different PHY layers, that is, PHY layers on the sender side and the receiver side, through the PHY layer.

A physical channel is made up of multiple subframes on a time axis and multiple subcarriers on a frequency axis. Here, one subframe is made up of a plurality of symbols and a plurality of subcarriers on the time axis. One subframe is made up of a plurality of resource blocks, and one resource block is made up of a plurality of symbols and a plurality of subcarriers. A Transmission Time Interval (TTI), that is, a unit time during which data is transmitted, is 1 ms corresponding to one subframe.

In accordance with 3GPP LTE, physical channels that are present in the physical layer of the sender side and the receiver side can be divided into a Physical Downlink Shared Channel (PDSCH) and a Physical Uplink Shared Channel (PUSCH), that is, data channels, and a Physical Downlink Control Channel (PDCCH), a Physical Control Format Indicator Channel (PCFICH), a Physical Hybrid-ARQ Indicator Channel (PHICH), and a Physical Uplink Control Channel (PUCCH), that is, control channels.

A PCFICH that is transmitted in the first OFDM symbol of a subframe carries a Control Format Indicator (CFI) regarding the number of OFDM symbols (i.e., the size of a control region) used to send control channels within the subframe. A wireless device first receives a CFI on a PCFICH and then monitors PDCCHs.

Unlike a PDCCH, a PCFICH is transmitted through the fixed PCFICH resources of a subframe without using blind decoding.

A PHICH carries positive-acknowledgement (ACK)/negative-acknowledgement (NACK) signals for an uplink (UL) Hybrid Automatic Repeat reQuest (HARQ). ACK/NACK signals for UL data on a PUSCH that is transmitted by a wireless device are transmitted on a PHICH.

A Physical Broadcast Channel (PBCH) is transmitted in four former OFDM symbols of the second slot of the first subframe of a radio frame. The PBCH carries system information that is essential for a wireless device to communicate with an eNodeB, and system information transmitted through a PBCH is called a Master Information Block (MIB). In contrast, system information transmitted on a PDSCH indicated by a PDCCH is called a System Information Block (SIB).

A PDCCH can carry the resource allocation and transport format of a downlink-shared channel (DL-SCH), information about the resource allocation of an uplink shared channel (UL-SCH), paging information for a PCH, system information for a DL-SCH, the resource allocation of an upper layer control message transmitted on a PDSCH, such as a random access response, a set of transmit power control commands for pieces of UE within a specific UE group, and the activation of a Voice over Internet Protocol (VoIP). A plurality of PDCCHs can be transmitted within the control region, and UE can monitor a plurality of PDCCHs. A PDCCH is transmitted on one Control Channel Element (CCE) or an aggregation of multiple contiguous CCEs. A CCE is a logical allocation unit used to provide a PDCCH with a coding rate according to the state of a radio channel. A CCE corresponds to a plurality of resource element groups. The format of a PDCCH and the number of bits of a possible PDCCH are determined by a relationship between the number of CCEs and a coding rate provided by CCEs.

Control information transmitted through a PDCCH is called Downlink Control Information (DCI). DCI can include the resource allocation of a PDSCH (also called a downlink (DL) grant)), the resource allocation of a PUSCH (also called an uplink (UL) grant), a set of transmit power control commands for pieces of UE within a specific UE group, and/or the activation of a Voice over Internet Protocol (VoIP).

Several layers are present in the second layer. First, a Medium Access Control (MAC) layer functions to map various logical channels to various transport channels and also plays a role of logical channel multiplexing for mapping multiple logical channels to one transport channel. The MAC layer is connected to a Radio Link Control (RLC) layer, that is, a higher layer, through a logical channel. The logical channel is basically divided into a control channel through which information of the control plane is transmitted and a traffic channel through which information of the user plane is transmitted depending on the type of transmitted information.

The RLC layer of the second layer functions to control a data size that is suitable for sending, by a lower layer, data received from a higher layer in a radio section by segmenting and concatenating the data. Furthermore, in order to guarantee various types of QoS required by radio bearers, the RLC layer provides three types of operation modes: a Transparent Mode (TM), an Un-acknowledged Mode (UM), and an Acknowledged Mode (AM). In particular, AM RLC performs a retransmission function through an Automatic Repeat and Request (ARQ) function for reliable data transmission.

The Packet Data Convergence Protocol (PDCP) layer of the second layer performs a header compression function for reducing the size of an IP packet header containing control information that is relatively large in size and unnecessary in order to efficiently send an IP packet, such as IPv4 or IPv6, in a radio section having a small bandwidth when sending the IP packet. Accordingly, transmission efficiency of the radio section can be increased because only essential information is transmitted in the header part of data. Furthermore, in an LTE system, the PDCP layer also performs a security function. The security function includes ciphering for preventing the interception of data by a third party and integrity protection for preventing the manipulation of data by a third party.

A Radio Resource Control (RRC) layer at the highest place of the third layer is defined only in the control plane and is responsible for control of logical channels, transport channels, and physical channels in relation to the configuration, re-configuration, and release of Radio Bearers (RBs). Here, the RB means service provided by the second layer in order to transfer data between UE and an E-UTRAN.

If an RRC connection is present between the RRC layer of UE and the RRC layer of a wireless network, the UE is in an RRC_CONNECTED state. If not, the UE is in an RRC_IDLE state.

An RRC state and an RRC connection method of UE are described below. The RRC state means whether or not the RRC layer of UE has been logically connected to the RRC layer of an E-UTRAN. If the RRC layer of UE is logically connected to the RRC layer of an E-UTRAN, it is called the RRC_CONNECTED state. If the RRC layer of UE is not logically connected to the RRC layer of an E-UTRAN, it is called the RRC_IDLE state. Since UE in the RRC_CONNECTED state has an RRC connection, an E-UTRAN can check the existence of the UE in a cell unit, and thus control the UE effectively. In contrast, if UE is in the RRC_IDLE state, an E-UTRAN cannot check the existence of the UE, and a core network is managed in a Tracking Area (TA) unit, that is, an area unit greater than a cell. That is, only the existence of UE in the RRC_IDLE state is checked in an area unit greater than a cell. In such a case, the UE needs to shift to the RRC_CONNECTED state in order to be provided with common mobile communication service, such as voice or data. Each TA is classified through Tracking Area Identity (TAI). UE can configure TAI through Tracking Area Code (TAC), that is, information broadcasted by a cell.

When a user first turns on the power of UE, the UE first searches for a proper cell, establishes an RRC connection in the corresponding cell, and registers information about the UE with a core network. Thereafter, the UE stays in the RRC_IDLE state. The UE in the RRC_IDLE state (re)selects a cell if necessary and checks system information or paging information. This process is called camp on. When the UE in the RRC_IDLE state needs to establish an RRC connection, the UE establishes an RRC connection with the RRC layer of an E-UTRAN through an RRC connection procedure and shifts to the RRC_CONNECTED state. A case where the UE in the RRC IDLE state needs to establish with an RRC connection includes multiple cases. The multiple cases may include, for example, a case where UL data needs to be transmitted for a reason, such as a call attempt made by a user and a case where a response message needs to be transmitted in response to a paging message received from an E-UTRAN.

A Non-Access Stratum (NAS) layer placed over the RRC layer performs functions, such as session management and mobility management.

The NAS layer shown in FIG. 3 is described in detail below.

Evolved Session Management (ESM) belonging to the NAS layer performs functions, such as the management of default bearers and the management of dedicated bearers, and ESM is responsible for control that is necessary for UE to use PS service from a network. Default bearer resources are characterized in that they are allocated by a network when UE first accesses a specific Packet Data Network (PDN) or accesses a network. Here, the network allocates an IP address available for UE so that the UE can use data service and the QoS of a default bearer. LTE supports two types of bearers: a bearer having Guaranteed Bit Rate (GBR) QoS characteristic that guarantees a specific bandwidth for the transmission and reception of data and a non-GBR bearer having the best effort QoS characteristic without guaranteeing a bandwidth. A default bearer is assigned a non-GBR bearer, and a dedicated bearer may be assigned a bearer having a GBR or non-GBR QoS characteristic.

In a network, a bearer assigned to UE is called an Evolved Packet Service (EPS) bearer. When assigning an EPS bearer, a network assigns one ID. This is called an EPS bearer ID. One EPS bearer has QoS characteristics of a Maximum Bit Rate (MBR) and a Guaranteed Bit Rate (GBR) or an Aggregated Maximum Bit Rate (AMBR).

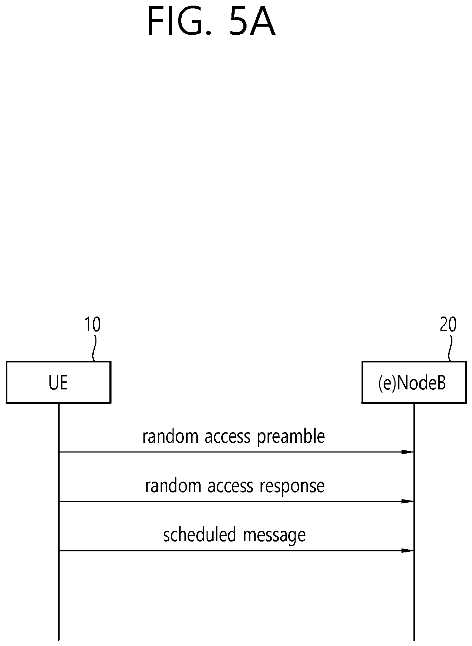

FIG. 5a is a flowchart illustrating a random access process in 3GPP LTE.

The random access process is used for UE 10 to obtain UL synchronization with a base station, that is, an eNodeB 20, or to be assigned UL radio resources.

The UE 10 receives a root index and a physical random access channel (PRACH) configuration index from the eNodeB 20. 64 candidate random access preambles defined by a Zadoff-Chu (ZC) sequence are present in each cell. The root index is a logical index that is used for the UE to generate the 64 candidate random access preambles.

The transmission of a random access preamble is limited to specific time and frequency resources in each cell. The PRACH configuration index indicates a specific subframe on which a random access preamble can be transmitted and a preamble format.

The UE 10 sends a randomly selected random access preamble to the eNodeB 20. Here, the UE 10 selects one of the 64 candidate random access preambles. Furthermore, the UE selects a subframe corresponding to the PRACH configuration index. The UE 10 sends the selected random access preamble in the selected subframe.

The eNodeB 20 that has received the random access preamble sends a Random Access Response (RAR) to the UE 10. The random access response is detected in two steps. First, the UE 10 detects a PDCCH masked with a random access-RNTI (RA-RNTI). The UE 10 receives a random access response within a Medium Access Control (MAC) Protocol Data Unit (PDU) on a PDSCH that is indicated by the detected PDCCH.

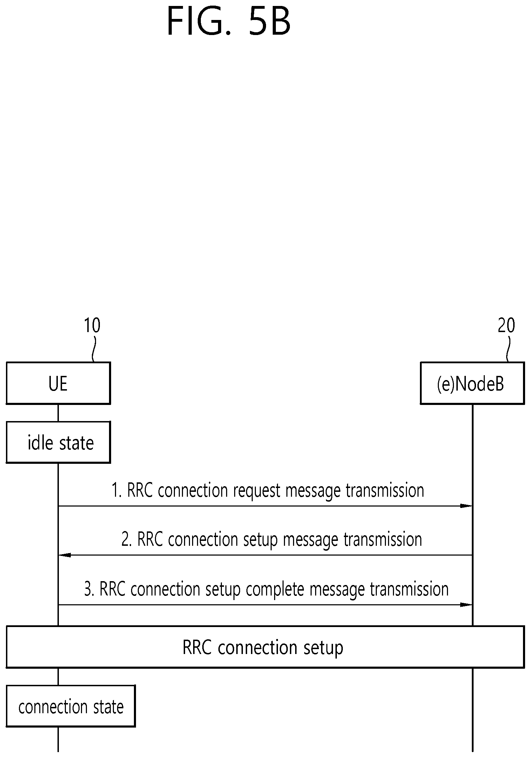

FIG. 5b illustrates a connection process in a radio resource control (RRC) layer.

FIG. 5b shows an RRC state depending on whether there is an RRC connection. The RRC state denotes whether the entity of the RRC layer of UE 10 is in logical connection with the entity of the RRC layer of eNodeB 20, and if yes, it is referred to as RRC connected state, and if no as RRC idle state.

In the connected state, UE 10 has an RRC connection, and thus, the E-UTRAN may grasp the presence of the UE on a cell basis and may thus effectively control UE 10. In contrast, UE 10 in the idle state cannot grasp eNodeB 20 and is managed by a core network on the basis of a tracking area that is larger than a cell. The tracking area is a set of cells. That is, UE 10 in the idle state is grasped for its presence only on a larger area basis, and the UE should switch to the connected state to receive a typical mobile communication service such as voice or data service.

When the user turns on UE 10, UE 10 searches for a proper cell and stays in idle state in the cell. UE 10, when required, establishes an RRC connection with the RRC layer of eNodeB 20 through an RRC connection procedure and transits to the RRC connected state.

There are a number of situations where the UE staying in the idle state needs to establish an RRC connection, for example, when the user attempts to call or when uplink data transmission is needed, or when transmitting a message responsive to reception of a paging message from the EUTRAN.

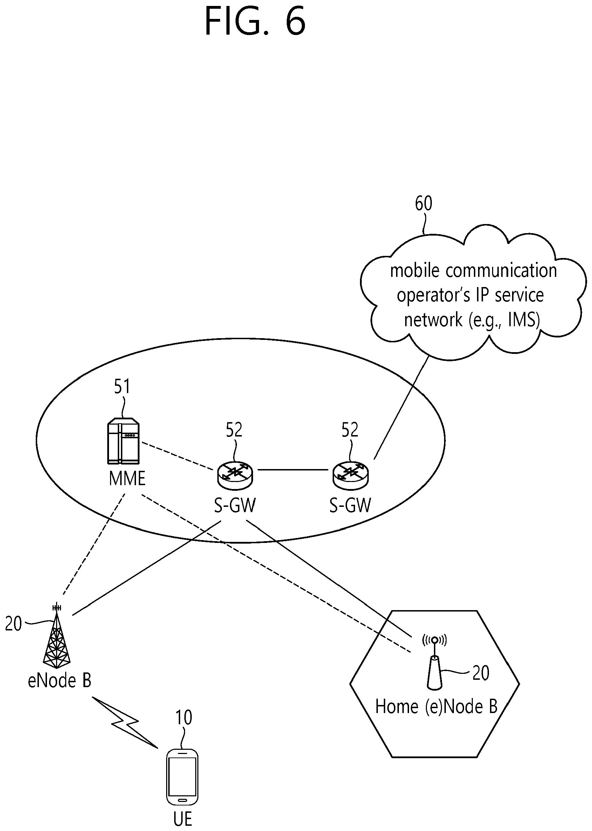

In order for the idle UE 10 to be RRC connected with eNodeB 20, UE 10 needs to perform the RRC connection procedure as described above. The RRC connection procedure generally comes with the process in which UE 10 transmits an RRC connection request message to eNodeB 20, the process in which eNodeB 20 transmits an RRC connection setup message to UE 10, and the process in which UE 10 transmits an RRC connection setup complete message to eNodeB 20. The processes are described in further detail with reference to FIG. 6.
1) The idle UE 10, when attempting to establish an RRC connection, e.g., for attempting to call or transmit data or responding to paging from eNodeB 20, sends an RRC connection request message to eNodeB 20.
2) When receiving the RRC connection message from UE 10, eNodeB 20 accepts the RRC connection request from UE 10 if there are enough radio resources, and eNodeB 20 sends a response message, RRC connection setup message, to UE 10.
3) When receiving the RRC connection setup message, UE 10 transmits an RRC connection setup complete message to eNodeB 20. If UE 10 successfully transmits the RRC connection setup message, UE 10 happens to establish an RRC connection with eNodeB 20 and switches to the RRC connected state.

In the 3^{rd} or 4^{th} mobile communication system, an attempt to increase a cell capacity is continuously made in order to support a high-capacity service and a bidirectional service such as multimedia contents, streaming, and the like.

That is, as various large-capacity transmission technologies are required with development of communication and spread of multimedia technology, a method for increase a radio capacity includes a method of allocating more frequency resources, but there is a limit in allocating more frequency resources to a plurality of users with limited frequency resources.

An approach to use a high-frequency band and decrease a cell radius has been made in order to increase the cell capacity. When a cell having a small radius, such as a pico cell is adopted, a band higher than a frequency used in the existing cellular system may be used, and as a result, it is possible to transfer more information. However, since more base stations should be installed in the same area, higher cost is required.

In recent years, a Femto base station such as a Home (e)NodeB 30 has been proposed while making the approach to increase the cell capacity by using the small cell.

The Home (e)Node 30 has been researched based on a RAN WG3 of the 3GPP Home (e)NodeB and in recent years, the Home (e)NodeB 30 has been in earnest researched even in an SA WG.

FIG. 6 is a diagram illustrating the relationship between (e)NodeB and Home (e)NodeB.

The (e)NodeB 20 illustrated in FIG. 6 corresponds to a macro base station and the Home (e)NodeB 30 illustrated in FIG. 6 may correspond to the Femto base station. In the specification, (e)NodeB intends to be described based on terms of the 3GPP and (e)NodeB is used when NodeB and eNodeB are mentioned together. Further, Home (e)NodeB is used when Home NodeB and Home eNodeB are mentioned together.

Interfaces marked with dotted lines are used to transmit control signals among the (e)NodeB 20, the Home (e)NodeB 30, and an MME 510. In addition, interfaced marked with solid lines are used to transmit data of the user plane.

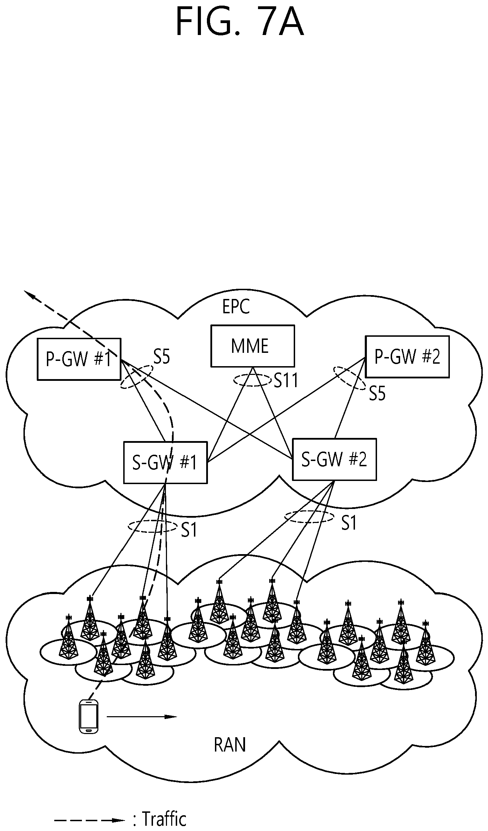

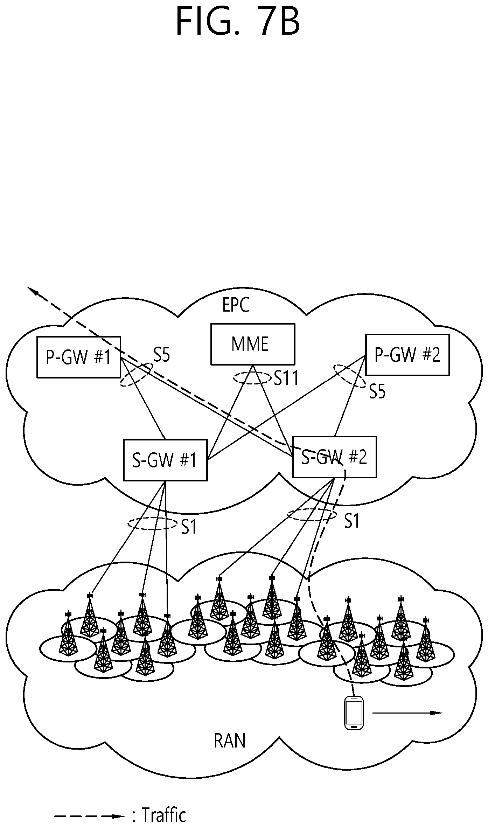

FIG. 7a illustrates a PDN connection and traffic transmission and reception according to a conventional art, and FIG. 7b illustrates a problem of the conventional art.

As illustrated in FIG. 7a, when a PDN connection of a UE is generated through S-GW #1 and P-GW #1, traffic is transmitted and received via S-GW #1 and P-GW #1. As illustrated in FIG. 7b, when the UE moved, S-GW #2 is selected for the PDN connection. That is, since the serving area of an S-GW (for example, the service area of an S-GW) is predetermined, an S-GW capable of serving a UE is selected based on the topology of a network. However, since a P-GW is selected based on APN information, not on the location of a UE, the P-GW is not reselected even though the UE moves from the location illustrated in FIG. 7a to the location illustrated in FIG. 7b. Accordingly, although the UE is located relatively closer to P-GW #2 than to P-GW #1, the traffic of the UE is transmitted and received through S-GW #2 and P-GW #1, which causes inefficiency in traffic transmission path and network management.

Accordingly, Selected IP Traffic Offload (SIPTO), which allows the reselection or relocation of a P-GW to route selected traffic (for example, Internet traffic) to a network node located close to a UE (UE's point of attachment to the access network), has been proposed as a method for optimizing a P-GW.

However, there is no method for dealing with Circuit Switched Fall Back (CSFB) or Single Radio Voice Call Continuity (SRVCC) that occurs during an SIPTO service.
The document "3rd Generation Partnership Project; Technical Specification Group SA Study on Co-ordinated PGW change for Selected IP Traffic Offload (CSIPTO) (Release 13)", 3GPP STANDARD, TR22.828, V1.0.0, 27 February 2014 defines standard specifications for CSIPTO.

### SUMMARY OF THE INVENTION

Accordingly, an object of the present invention is to present a method that can solve the aforementioned problem.

To achieve the foregoing object, there are provided a method according to claim 1 and a MME according to claim 12. Further embodiments are described in dependent claims 2 to 11, 13, 14 and 15. Also, one embodiment of the present specification provides a method for processing Circuit Switched Fall Back (CSFB) or Single Radio Voice Call Continuity (SRVCC) during a Selected IP Traffic Offload (SIPTO) service in a network entity responsible for a control plane in a mobile communication network, the method including: establishing a second Public Data Network (PDN) connection according to an usage of the SIPTO service in a state where a first PDN connection is established for a user equipment
(UE), while maintaining the first PDN connection; determining any one PDN connection to release among the first PDN connection and the second PDN connection when CSFB or SRVCC is requested; and releasing the determined PDN connection.

The determined PDN connection may be the first PDN connection.

The method may further include: storing, as context information on the UE, information indicating that the first PDN connection is a sub-optimal PDN connection and is associated with the SIPTO service; and storing, as context information on the UE, information indicating that the second PDN connection is an optimal PDN connection and is associated with the SIPTO service.

The method may further include deleting the information on the first PDN connection from the context information when a packet-switched (PS) handover is supported and thus a Forward Relocation Request message needs to be transmitted to another network entity.

The Forward Relocation Request message may include no information on the first PDN connection.

The determined PDN connection may be released when a PS handover is not supported during a CSFB procedure and thus a Suspend Request message is received from another network entity.

The determined PDN connection may be released when a PS handover is not supported during an SRVCC procedure and thus a SRVCC PS to CS Complete Notification message is received from another network entity.

The releasing of the determined PDN connection may include: transmitting a message requesting release of the determined PDN connection to a network node; and releasing a resource for the determined PDN connection.

The releasing of the determined PDN connection may further include receiving a response to the message requesting the release of the determined PDN connection from the network node, and the resource for the determined PDN connection is released when the response to the message requesting the release of the determined PDN connection is received.

The response to the message requesting the release of the determined PDN connection may be a Delete Session Request message including a default bearer ID of the determined PDN connection.

The UE may release the determined PDN connection when it is recognized that a PS handover is not supported during a CSFB or SRVCC procedure, and the releasing of the determined PDN connection is releasing a resource for the determined PDN connection.

The UE may additionally transmit information requesting release of the determined PDN connection when transmitting a Suspend message to another network entity.

To achieve the foregoing object, one embodiment of the present specification provides a network entity that is responsible for a control plane in a mobile communication network and processes CSFB or SRVCC during a SIPTO service in a network entity, the network entity including: a transceiver; and a controller to establish a second PDN connection according to an usage of the SIPTO service in a state where a first PDN connection is established for a UE through the transceiver, while maintaining the first PDN connection, to determine any one PDN connection to release among the first PDN connection and the second PDN connection when CSFB or SRVCC is requested, and to release the determined PDN connection.

The network entity may further include a storage means to store, as context information on the UE, information indicating that the first PDN connection is a sub-optimal PDN connection and is associated with the SIPTO service, and to store, as context information on the UE, information indicating that the second PDN connection is an optimal PDN connection and is associated with the SIPTO service.

The controller may delete the information on the first PDN connection from the context information when a PS handover is supported and thus a Forward Relocation Request message needs to be transmitted to another network entity.

The controller may release the determined PDN connection when a PS handover is not supported during a CSFB procedure and thus a Suspend Request message is received from another network entity.

The controller may release the determined PDN connection when a PS handover is not supported during an SRVCC procedure and thus a SRVCC PS to CS Complete Notification message is received from another network entity.

According to the embodiments of the present invention, the problems in the related art can be solved.

### BRIEF DESCRIPTION OF THE DRAWINGS

FIG. 1 is a structural diagram of an evolved mobile communication network.
FIG. 2 is an exemplary diagram illustrating architectures of a general E-UTRAN and a general EPC.
FIG. 3 is an exemplary diagram illustrating a structure of a radio interface protocol on a control plane between UE and eNodeB.
FIG. 4 is another exemplary diagram illustrating a structure of a radio interface protocol on a user plane between the UE and a base station.
FIG. 5a is a flowchart illustrating a random access process in 3GPP LTE.
FIG. 5b illustrates a connection process in a radio resource control (RRC) layer.
FIG. 6 is a diagram illustrating the relationship between (e)NodeB and Home (e)NodeB.
FIG. 7a illustrates a PDN connection and traffic transmission and reception according to a conventional art.
FIG. 7b illustrates a problem of the conventional art in a scenario shown in FIG. 7b.
FIG. 8a illustrates the concept of Circuit Switched Fall Back (CSFB) for a Mobile Originating (MO) call, and FIG. 8b and Fig. 8c illustrate an example of a CSFB procedure for an MO call.
FIG. 9a illustrates the concept of CSFB for a Mobile Terminating (MT) call, and FIG.9b and Fig. 9c illustrate an example of a CSFB procedure for an MT call.
FIG. 10a illustrates the concept of Single Radio Voice Call Continuity (SRVCC), and FIG. 10b and Fig. 10c illustrate an example of an SRVCC procedure.
FIG. 11 illustrates the concept of Selected IP Traffic Offload (SIPTO) in the scenario of FIG. 7a.
FIG. 12 illustrates a scenario of Co-ordinated Selected IP traffic Offload (CSIPTO) discussed in 3GPP release 13.
FIG. 13a and FIG. 13b illustrate a CSFB processing method during an SIPTO service according to a first embodiment of the present specification.
FIG. 14a and FIG. 14b illustrate a SRVCC processing method during an SIPTO service according to a second embodiment of the present specification.
FIG. 15 is a block diagram illustrating a configuration of a UE 100 and an MME 510 according to one embodiment of the present invention.

### DESCRIPTION OF EXEMPLARY EMBODIMENTS

The present invention is described in light of UMTS (Universal Mobile Telecommunication System) and EPC (Evolved Packet Core), but not limited to such communication systems, and may be rather applicable to all communication systems and methods to which the technical spirit of the present invention may apply.

The technical terms used herein are used to merely describe specific embodiments and should not be construed as limiting the present invention. Further, the technical terms used herein should be, unless defined otherwise, interpreted as having meanings generally understood by those skilled in the art but not too broadly or too narrowly. Further, the technical terms used herein, which are determined not to exactly represent the spirit of the invention, should be replaced by or understood by such technical terms as being able to be exactly understood by those skilled in the art. Further, the general terms used herein should be interpreted in the context as defined in the dictionary, but not in an excessively narrowed manner.

The expression of the singular number in the specification includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the specification, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present invention.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the present invention will be described in greater detail with reference to the accompanying drawings. In describing the present invention, for ease of understanding, the same reference numerals are used to denote the same components throughout the drawings, and repetitive description on the same components will be omitted. Detailed description on well-known arts which are determined to make the gist of the invention unclear will be omitted. The accompanying drawings are provided to merely make the spirit of the invention readily understood, but not should be intended to be limiting of the invention. It should be understood that the spirit of the invention may be expanded to its modifications, replacements or equivalents in addition to what is shown in the drawings.

In the drawings, user equipments (UEs) are shown for example. The UE may also be denoted a terminal or mobile equipment (ME). The UE may be a laptop computer, a mobile phone, a PDA, a smartphone, a multimedia device, or other portable device, or may be a stationary device such as a PC or a car mounted device.

### Definition of terms

For a better understanding, the terms used herein are briefly defined before going to the detailed description of the invention with reference to the accompanying drawings.

A GERAN is an abbreviation of a GSM EDGE Radio Access Network, and it refers to a radio access section that connects a core network and UE by GSM/EDGE.

A UTRAN is an abbreviation of a Universal Terrestrial Radio Access Network, and it refers to a radio access section that connects the core network of the 3rd generation mobile communication and UE.

An E-UTRAN is an abbreviation of an Evolved Universal Terrestrial Radio Access Network, and it refers to a radio access section that connects the core network of the 4th generation mobile communication, that is, LTE, and UE.

An UMTS is an abbreviation of a Universal Mobile Telecommunication System, and it refers to the core network of the 3rd generation mobile communication.

UE or an MS is an abbreviation of User Equipment or a Mobile Station, and it refers to a terminal device.

An EPS is an abbreviation of an Evolved Packet System, and it refers to a core network supporting a Long Term Evolution (LTE) network and to a network evolved from an UMTS.

A PDN is an abbreviation of a Public Data Network, and it refers to an independent network where a service for providing service is placed.

A PDN connection refers to a connection from UE to a PDN, that is, an association (or connection) between UE represented by an IP address and a PDN represented by an APN.

A PDN-GW is an abbreviation of a Packet Data Network Gateway, and it refers to a network node of an EPS network which performs functions, such as the allocation of a UE IP address, packet screening & filtering, and the collection of charging data.

A Serving gateway (Serving GW) is a network node of an EPS network which performs functions, such as mobility anchor, packet routing, idle mode packet buffering, and triggering an MME to page UE.

A Policy and Charging Rule Function (PCRF) is a node of an EPS network which performs different QoS for each service flow and a policy decision for dynamically applying a charging policy.

An Access Point Name (APN) is the name of an access point that is managed in a network and provides to UE. That is, an APN is a character string that denotes or identifies a PDN. Requested service or a network (PDN) is accessed via a P-GW. An APN is a name (character string, e.g., 'internet.mnc012.mcc345.gprs') previously defined within a network so that the P-GW can be searched for.

A Tunnel Endpoint Identifier (TEID) is an end point ID of a tunnel set up between nodes within a network and is set in each section as a bearer unit of each terminal.

A NodeB is an eNodeB of a UMTS network and installed outdoors. The cell coverage of the NodeB corresponds to a macro cell.

An eNodeB is an eNodeB of an Evolved Packet System (EPS) and is installed outdoors. The cell coverage of the eNodeB corresponds to a macro cell.

An (e)NodeB is a term that denotes a NodeB and an eNodeB.

An MME is an abbreviation of a Mobility Management Entity, and it functions to control each entity within an EPS in order to provide a session and mobility for UE.

A session is a passage for data transmission, and a unit thereof may be a PDN, a bearer, or an IP flow unit. The units may be classified into a unit of the entire target network (i.e., an APN or PDN unit) as defined in 3GPP, a unit (i.e., a bearer unit) classified based on QoS within the entire target network, and a destination IP address unit.

A PDN connection is a connection from UE to a PDN, that is, an association (or connection) between UE represented by an IP address and a PDN represented by an APN. It means a connection between entities (i.e., UE-PDN GW) within a core network so that a session can be formed.

UE context is information about the situation of UE which is used to manage the UE in a network, that is, situation information including an UE ID, mobility (e.g., a current location), and the attributes of a session (e.g., QoS and priority)

A Non-Access-Stratum (NAS) is a higher stratum of a control plane between UE and an MME. The NAS supports mobility management and session management between UE and a network, IP address maintenance, and so on.

RAT is an abbreviation of Radio Access Technology, and it means a GERAN, a UTRAN, or an E-UTRAN.

Local Operating Environment Information: This is a set of implementation specific parameters which describe the local environment in which the UE is operating.

Presence Reporting Area: This is an area defined to report the presence of a UE in a 3GPP packet domain for the reasons of policy control and/or accounting or the like. In case of E-UTRAN, the presence reporting area consists of adjacent or not-adjacent tracking areas or a set of eNodeBs and/or cells. There are two types of presence reporting areas. One is a UE-dedicated presence reporting area, and the other is a presence reporting area predetermined by a core network.

ANDSF(Access Network Discovery and Selection Function): This is one of network entities for providing a policy for discovering and selecting an access that can be used by a UE on an operator basis.

ISRP(Inter-System Routing Policy): This is a rule defined by the operator to indicate which one will be used by the UE for routing of IP traffic among several radio access interfaces. The ISRP may include three types of rules as follows, as a policy for defining an access network preferred (i.e., having a high priority) or restricted to route/steer a packet service (or an IP flow or IP traffic or applications). That is, the ISRP may be divided into an IP flow mobility (IFOM) rule, a multi access PDN connectivity (MAPCON) rule, and a non-seamless WLAN offload (NSWO) rule as follows.
- IFOM(IP Flow Mobility) rule: This rule is in regards to a list in which access technologies/access networks to be used by the UE are arranged according to a priority, when traffic matched to a specific IP traffic filter can be routed on a specific APN or on any APN. Further, this rule may designate for which radio access the traffic matched to the specific IP traffic filter is limited on the specific APN or on the any APN.
- MAPCON(Multi Access PDN Connectivity) rule: This rule is a list in which the access technologies/access networks to be used by the UE are arranged according to the priority when a PDN connection for the specific APN can be routed. Further, this rule may designate for which radio access a PDN connection to a specific APN will be limited.
- NSWO(Non-seamless WLAN offload) rule: This rule designates whether certain traffic will be offloaded or not offloaded non-seamlessly to a WLAN.

ISMP(Inter-System Mobility Policy): This is a set of rules defined by an operator to have an impact on an inter-system mobility decision made by the UE. When the UE can route IP traffic on a single radio access interface, the UE may use ISMP to select the most appropriate access technology type or access network in a given time.

RAN rule: This is to evaluate an RAN rule programmed in the UE and having radio access network (RAN) assistance parameters received from the network. The RAN rule is also called WLAN interworking supported by the RAN used without ANDSF ISRP/ISMP. When the RAN rule for moving traffic to the WLAN is satisfied, an access stratum (AS) layer of the UE delivers a move-traffic-to-WLAN indication and a WLAN identifier together to a higher layer of the UE. In this case, the UE selects the WLAN and moves all offloadable PDN connections to the WLAN. Alternatively, when the RAN rule for moving the traffic to the 3GPP access is satisfied, the AS layer of the UE delivers a move-traffic-from-WLAN indication to the higher layer of the UE. In this case, the UE moves all PDN connections on the WLAN through 3GPP. 3GPP TS 23.401, TS 23.060, TS 23.402, TS 36.300, TS 36.304, TS 36.331, TS 25.304, and TS 25.331 may be incorporated herein by reference to know detailed descriptions on the RAN rule.

Multi-access PDN connection: This is a PDN connection in which traffic can be routed to the 3GPP access and/or the WLAN access. Each IP flow is routed only to one access at one instance.

Meanwhile, the present invention is described hereinafter with reference to the accompanying drawings.

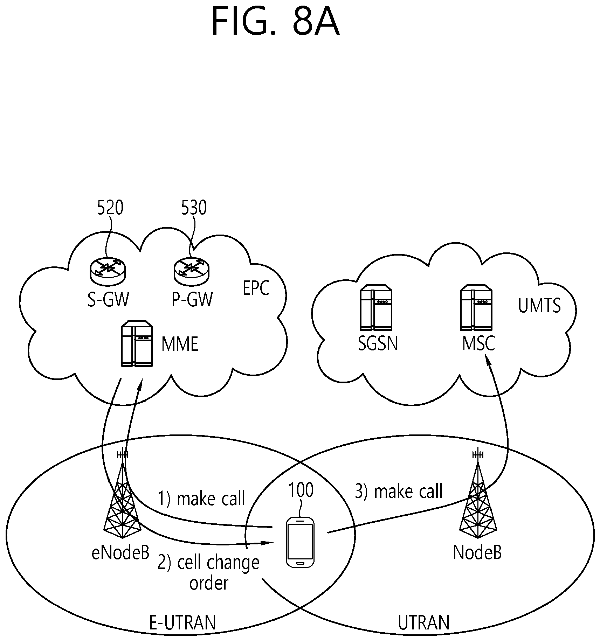

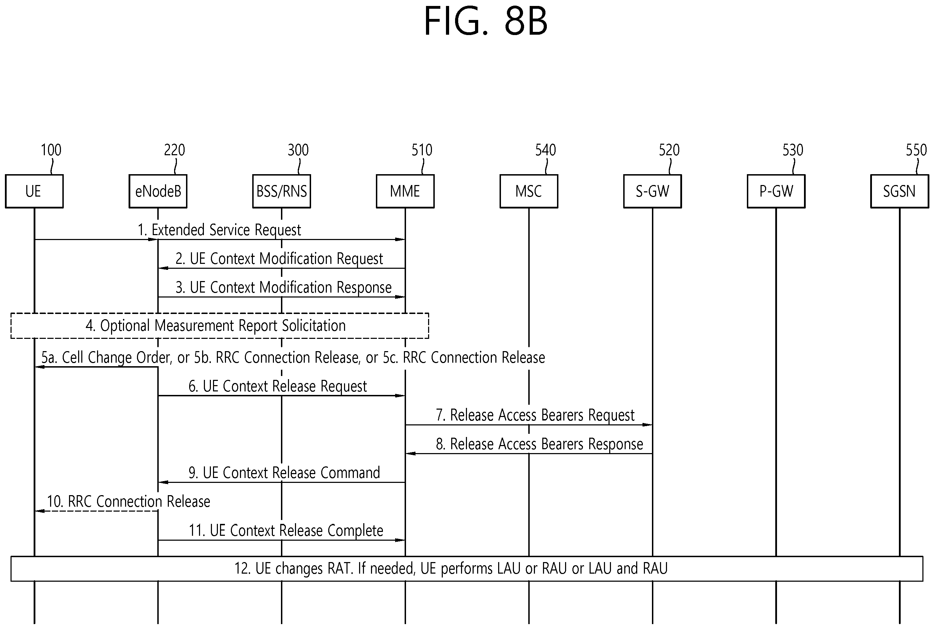

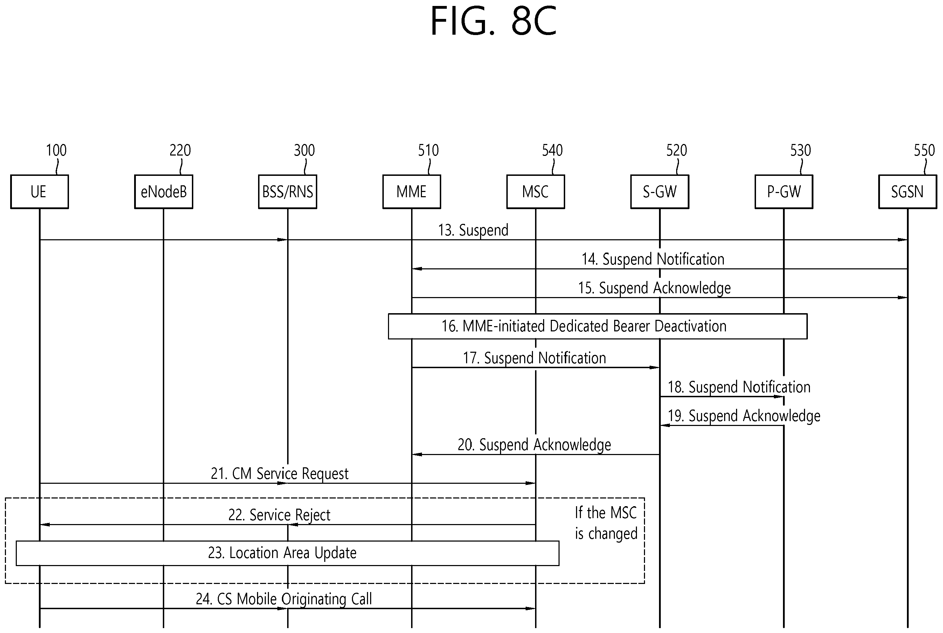

FIG. 8a illustrates the concept of Circuit Switched Fall Back (CSFB) for a Mobile Originating (MO) call, and FIG.8b and FIG.8c illustrate an example of a CSFB procedure for an MO call.

First, as illustrated in FIG. 8a, a UE 100 is located in an overlapping area of E-UTRAN coverage and UTRAN coverage. Here, when the UE 100 attempts an MO call in an E-UTRAN, an MME/eNodeB instructs the UE to change to a UTRAN cell. After changing to the UTRAN cell, the UE makes a call through a CS network, which is referred to as CSFB.

The CSFB procedure illustrated in FIG. 8b and FIG. 8c is a procedure in which the UE 100 camping on the E-UTRAN changes an RAT to a GERAN or UTRAN to initiate an MO voice call upon requesting a call.

In particular, FIG. 8b and FIG. 8c illustrate a case where the UE 100 does not support a handover (HO) for a packet-switched (PS) service to a target RAT on which the UE 100 is to camp.

For example, when the target RAT is the GERAN, the UE 100 does not support a Dual Transfer Mode (DTM) and/or the target network does not support the DTM. Alternatively, when the target RAT is the UTRAN, the target network does not support a PS HO.

The CSFB procedure illustrated in FIG. 8b and FIG. 8c is described in detail as follows.
1. The UE 100 transmits an Extended Service Request message to the MME 510 in order to start the CSFB procedure for an MO call, in which the message is transmitted to the MME 510 via the eNodeB 220.
   The Extended Service Request message includes information indicating that the request is an MO CSFB request.
   The UE 100 is a UE 100 that performs a combined EPS/IMSI Attach operation to receive a CSFB service, thus being attached not only to an EPS but also to a circuit-switched (CS) domain. That is, the MME 510 has registered the UE 100 in a mobile switching center (MSC) 540 of the CS domain through a SGs interface (the combined EPS/IMSI Attach operation is mentioned in 3GPP TS 23.272).
2. The MME 510 transmits a UE Context Modification Request message to the eNodeB 220. The message includes CSFB indicator information for the eNodeB to instruct the UE 100 to change an RAT to the GERAN/UTRAN for CSFB. Further, the message also includes Location Area Identity (LAI) information on the CS domain in which the UE 100 has been registered.
3. When the Context Modification Request message is received in operation 2, the eNodeB 220 responds to the MME 510 with a UE Context Modification Response message.
4. The eNodeB 220 may selectively request a measurement report from the UE 100 in order to determine a target GERAN/UTRAN cell to which the UE 100 is redirected.
5. The eNodeB 220 performs one of operations 5a, 5b, and 5c described below.
   5a. When the target cell is the GERAN and both the UE 100 and the network support an inter-RAT cell change order, the eNodeB 220 transmits an RRC message to the UE 100 so that the UE 100 performs the inter-RAT cell change order to a neighboring cell of the GERAN.
   5b. When one of the UE 100 and the network neither supports an inter-RAT PS handover from the E-UTRAN to the GERAN/UTRAN nor supports an inter-RAT cell change order to the GERAN, the eNodeB 220 performs RRC connection release with redirection to the GERAN or RRC connection release with redirection to the UTRAN.
   5c. When the UE 100 and the network support RRC connection release with redirection and Multi Cell System Information to the GERAN/UTRAN, the eNodeB 220 performs RRC connection release with redirection to the GERAN or RRC connection release with redirection to the UTRAN including one or more physical cell identities and system information associated therewith.
6. The eNodeB 220 transmits a UE Context Release Request message to the MME 510. When the target cell is the GERAN and the target cell or the UE 100 does not support the DTM, the message includes information indicating that a PS service is unavailable for the UE 100 in the target cell.
7. The MME 510 sends a Release Access Bearers Request message to a S-GW 520 so that the S-GW 520 releases all S1-U bearers (that, bearers between the S-GW and the eNodeB) related to the UE 100.
8. The S-GW 520 releases all eNodeB related information (the address and TEIDs of the eNodeB) on the UE 100 and responds to the MME 510 with a Release Access Bearers Response message. Due to this operation, other pieces of context information on the UE 100 stored in the S-GW 520 remain stored, without being unaffected (UE context information stored in the S-GW is mentioned in clause 5.7.3 of 3GPP TS 23.401).
9. The MME 510 transmits a UE Context Release Command message to the eNodeB 220 to release S1.
10. When the RRC connection is not yet released, the eNodeB 220 transmits an RRC Connection Release message to the UE 100. When the message is acknowledged by the UE 100, the eNodeB 220 deletes the UE context information.
11. The eNodeB 220 transmits a UE Context Release Complete message to the MME 510 to confirm the release of S1. Accordingly, a signaling connection between the MME and the eNodeB for the UE 100 is released. This operation may be performed immediately after operation 9.
12. The UE 100 performs one of operations 12a, 12b, 12c described below. Operation 12a is performed when operation 5a is performed, operation 12b is performed when operation 5b is performed, and operation 12c is performed when operation 5c is performed.
   12a. The UE 100 changes the RAT to a new cell of the GERAN and establishes a radio signaling connection.
   12b. The UE 100 changes the RAT to the target RAT and establishes a radio signaling connection.
   12c. The UE 100 changes the RAT to the target RAT and establishes a radio signaling connection using the Multi Cell System Information.

   After performing one of operations 12a, 12b, and 12c, when a Location Area (LA) of a new cell is different from stored one, the UE 100 performs Location Area Update (LAU). Further, when Routing Area Update (RAU) is necessary, the UE 100 performs RAU. It is mentioned in 3GPP TS 23.060 whether the UE 100 needs to perform RAU.
13. When the target RAT is the GERAN but the UE 100 or the target cell does not support the DTM, the UE 100 performs a suspension operation. To this end, the UE 100 transmits a Suspend message to a BSS 300, and the BSS 300 transmits the Suspend message to a SGSN 550.
14. When the Suspend message is received, the SGSN 550 transmits a Suspend Notification message to the MME 510.
15. The MME 510 responds to the SGSN 550 with a Suspend Acknowledge message.
   When the Suspend Notification message is received from the SGSN 550, the MME 510 performs operation 16 and 17 when the UE Context Release Request message received in operation 6 includes the information indicating that a PS service is unavailable for the UE 100 in the target cell.
16. The MME 510 performs MME-initiated Dedicated Bearer Deactivation so that the S-GW 520 and a P-GW 530 deactivate Guaranteed Bit Rates (GBR) bearer(s) (MME-initiated Dedicated Bearer Deactivation is mentioned in 3GPP TS 23.401).
17. The MME 510 transmits the Suspend Notification message to the S-GW 520 to preserve, defer, postpone, or suspend non-GBR bearer(s).
18. When the Suspend Notification message is received from the MME 510 in operation 17, the S-GW 520 transmits the Suspend Notification message to the P-GW(s) 530.
19. When the Suspend Notification message is received from the S-GW 520, the P-GW 530 responds to the S-GW 520 with a Suspend Acknowledge message.
20. The S-GW 520 responds to the MME 510 with a Suspend Acknowledge message.
   As a result of preservation, deferment, postponement, or suspension in operations 17 to 20, the MME 510 stores in the UE context information that the UE 100 is a suspended status. Further, all preserved non-GBR bearer(s) are displayed as being in the suspended stated in the S-GW 520 and the P-GW 530. In addition, when the P-GW 530 receives a packet directed to the suspended UE 100, the P-GW 530 discards the packet.
21. The UE 100 transmits a Connection Management (CM) Service Request message for MO call setup, in which the message is transmitted to the MSC 540 via the BSS/RNS 300.
22. When the MSC is changed or the UE 100 is not allowed in a Location Area, operations 22 and 23 are performed. The MSC 540 rejects a service request for MO call setup requested from the UE 100.
23. When a rejection of the service request is received from the MSC, the UE 100 performs LAU or Combined RA/LA based on Network Modes of Operation (NMO).
24. The UE 100 finishes an MO call setup operation. When operations 22 and 23 are performed, the UE 100 transmits a CM Service Request message to a new MSC 540. When MO call setup is finished, the UE 100 can make a voice call.

When the UE 100 stays in the GERAN and the PS service is suspended after a voice call is ended, the UE 100 resumes a PS service (for example, performs RAU or Combined RA/LA Update). Accordingly, the SGSN 550 resumes the PS service and instructs the S-GW 520 to resume the P-GW 530 that suspended bearer(s).

On the contrary, when the UE 100 goes back to the E-UTRAN after a voice call is ended, the UE 100 transmits a TAU Request message to the MME to resume a PS service. Accordingly, the MME resumes the PS service and instructs the S-GW 520 and the P-GW 530 to resume suspended bearer(s).

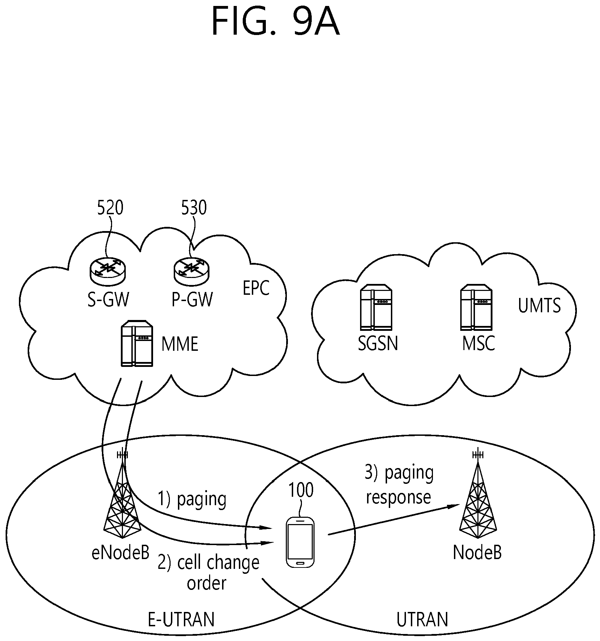

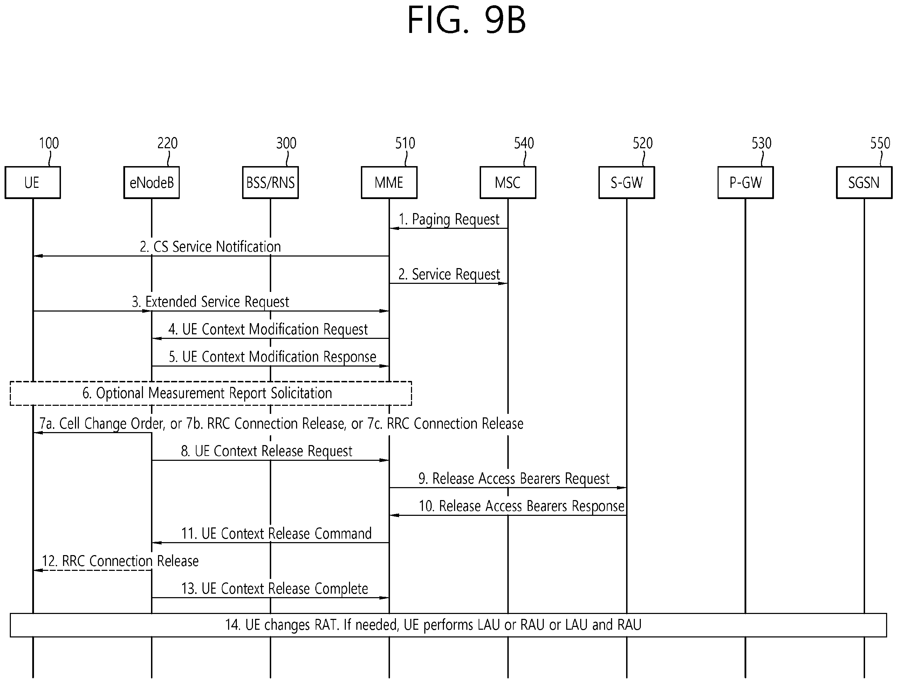

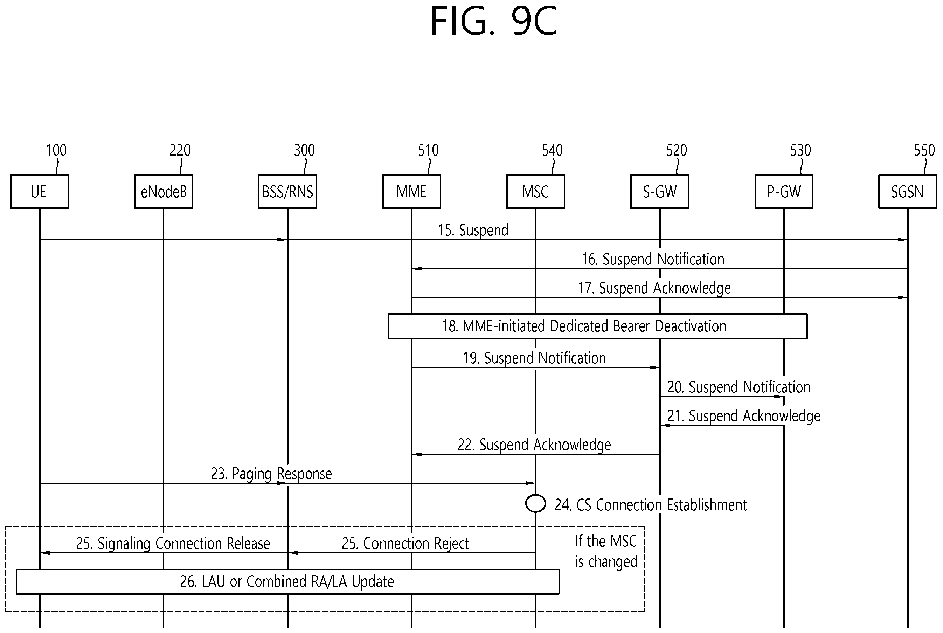

FIG. 9a illustrates the concept of CSFB for a Mobile Terminating (MT) call, and FIG.9b and FIG. 9c illustrates an example of a CSFB procedure for an MT call.

First, as illustrated in FIG. 9a, a UE 100 is located in an overlapping area of E-UTRAN coverage and UTRAN coverage. Here, the UE 100 receives paging for an MT call from an MME and receives an instruction to change to a UTRAN cell, the UE transmits a paging response to an MSC through a NodeB of a UTRAN. Then, the UE makes a call through a CS network in the UTRAN cell. This is called MT CSFB.

The CSFB procedure illustrated in FIG. 9b and FIG. 9c is a procedure in which when a terminating call is made to the UE 100 in an active mode that camps on an E-UTRAN, the UE 100 changes an RAT to a GERAN or UTRAN to initiate an MT voice call.

Here, where the UE 100 does not support an HO for a PS service to a target RAT on which the UE 100 is to camp. For example, when the target RAT is the GERAN, the UE 100 does not support the DTM and/or the target network does not support the DTM. Alternatively, where when the target RAT is the UTRAN, the target network does not support a PS HO.

The CSFB procedure illustrated in FIG. 9b and FIG. 9c is described in detail as follows.
1. The MSC 540 receives an MT (incoming) voice call directed to the UE 100. The UE 100 is a UE 100 that performs a combined EPS/IMSI Attach operation to receive a CSFB service, thus being attached not only to an EPS but also to a CS domain.
   That is, the MME 510 has registered the UE 100 in the MSC 540 of the CS domain through a SGs interface (the combined EPS/IMSI Attach operation is mentioned in 3GPP TS 23.272).
   When the MT voice call directed to the UE 100 is received, the MSC 540 transmits a Paging Request message to the MME 510 using the SGs interface.
2. The MME 510 transmits a CS Service Notification message in order to notify the UE 100 of the MT voice call. Further, the MME 510 transmits, to the MSC 540, a Service Request message including information indicating that the UE 100 is already in a connected mode.
3. The UE 100 transmits an Extended Service Request message to the MME 510 in order to start the CSFB procedure for an MT call, in which the message is transmitted to the MME 510 via the eNodeB 220. The Extended Service Request message includes information indicating that the request is an MT CSFB request.
4. The MME 510 transmits a UE Context Modification Request message to the eNodeB 220. The message includes CSFB indicator information for the eNodeB to instruct the UE 100 to change an RAT to the GERAN/UTRAN for CSFB. Further, the message also includes Location Area Identity (LAI) information on the CS domain in which the UE 100 has been registered.
5. When the Context Modification Request message is received in operation 4, the eNodeB 220 responds to the MME 510 with a UE Context Modification Response message.
6. The eNodeB 220 may selectively request a measurement report from the UE 100 in order to determine a target GERAN/UTRAN cell to which the UE 100 is redirected.
7. The eNodeB 220 performs one of operations 7a, 7b, and 7c described below.
   7a. When the target cell is the GERAN and both the UE 100 and the network support an inter-RAT cell change order, the eNodeB 220 transmits an RRC message to the UE 100 so that the UE 100 performs the inter-RAT cell change order to a neighboring cell of the GERAN.
   7b. When one of the UE 100 and the network neither supports an inter-RAT PS handover from the E-UTRAN to the GERAN/UTRAN nor supports an inter-RAT cell change order to the GERAN, the eNodeB 220 performs RRC connection release with redirection to the GERAN or RRC connection release with redirection to the UTRAN.
   7c. When the UE 100 and the network support RRC connection release with redirection and Multi Cell System Information to the GERAN/UTRAN, the eNodeB 220 performs RRC connection release with redirection to the GERAN or RRC connection release with redirection to the UTRAN including one or more physical cell identities and system information associated therewith.
8. The eNodeB 220 transmits a UE Context Release Request message to the MME 510. When the target cell is the GERAN and the target cell or the UE 100 does not support the DTM, the message includes information indicating that a PS service is unavailable for the UE 100 in the target cell.
9. The MME 510 sends a Release Access Bearers Request message to a S-GW 520 so that the S-GW releases all S1-U bearers (that, bearers between the S-GW and the eNodeB) related to the UE 100.
10. The S-GW 520 releases all eNodeB related information (the address and TEIDs of the eNodeB) on the UE 100 and responds to the MME 510 with a Release Access Bearers Response message. Due to this operation, other pieces of context information on the UE 100 stored in the S-GW 520 remain stored, without being unaffected (UE context information stored in the S-GW is mentioned in clause 5.7.3 of 3GPP TS 23.401).
11. The MME 510 transmits a UE Context Release Command message to the eNodeB 220 to release S1.
12. When the RRC connection is not yet released, the eNodeB 220 transmits an RRC Connection Release message to the UE 100. When the message is acknowledged by the UE 100, the eNodeB 220 deletes the UE context information.
13. The eNodeB 220 transmits a UE Context Release Complete message to the MME 510 to confirm the release of S1. Accordingly, a signaling connection between the MME and the eNodeB for the UE 100 is released. This operation may be performed immediately after operation 11.
14. The UE 100 performs one of operations 14a, 14b, 14c described below. Operation 14a is performed when operation 7a is performed, operation 14b is performed when operation 7b is performed, and operation 14c is performed when operation 7c is performed.
   14a. The UE 100 changes the RAT to a new cell of the GERAN and establishes a radio signaling connection.
   14b. The UE 100 changes the RAT to the target RAT and establishes a radio signaling connection.
   14c. The UE 100 changes the RAT to the target RAT and establishes a radio signaling connection using the Multi Cell System Information.

   After performing one of operations 14a, 14b, and 14c, when a Location Area (LA) of a new cell is different from stored one, the UE 100 performs Location Area Update (LAU). Further, when Routing Area Update (RAU) is necessary, the UE 100 performs RAU. It is mentioned in 3GPP TS 23.060 whether the UE 100 needs to perform RAU.
15. When the target RAT is the GERAN but the UE 100 or the target cell does not support the DTM, the UE 100 performs a suspension operation. To this end, the UE 100 transmits a Suspend message to a BSS 300, and the BSS 300 transmits the Suspend message to a SGSN 550.
16. When the Suspend message is received, the SGSN 550 transmits a Suspend Notification message to the MME 510.
17. The MME 510 responds to the SGSN 550 with a Suspend Acknowledge message.
   When the Suspend Notification message is received from the SGSN 550, the MME 510 performs operation 18 and 19 when the UE Context Release Request message received in operation 8 includes the information indicating that a PS service is unavailable for the UE 100 in the target cell.
18. The MME 510 performs MME-initiated Dedicated Bearer Deactivation so that the S-GW 520 and a P-GW 530 deactivate GBR bearer(s) (MME-initiated Dedicated Bearer Deactivation is mentioned in 3GPP TS 23.401).
19. The MME 510 transmits the Suspend Notification message to the S-GW 520 to preserve, defer, postpone, or suspend non-GBR bearer(s).
20. When the Suspend Notification message is received from the MME 510 in operation 19, the S-GW 520 transmits the Suspend Notification message to the P-GW(s) 530.
21. When the Suspend Notification message is received from the S-GW 520, the P-GW 530 responds to the S-GW 520 with a Suspend Acknowledge message.
22. The S-GW 520 responds to the MME 510 with a Suspend Acknowledge message.
   As a result of preservation and deferment in operations 19 to 22, the MME 510 stores in the UE context information that the UE 100 is a suspended status. Further, all preserved non-GBR bearer(s) are displayed as being in the suspended stated in the S-GW 520 and the P-GW 530. In addition, when the P-GW 530 receives a packet directed to the suspended UE 100, the P-GW 530 discards the packet.
23. When the UE 100 does not initiate LAU, the UE 100 transmits a Paging Response message. The message is transmitted to the MSC 540 via the BSS/RNS 300.
24. When the UE 100 is registered in the MSC and is allowed in a Location Area (LA), the MSC 540 establishes a CS call.
25. When the MSC 540 is changed or the UE 100 is not allowed in the Location Area, operations 25 and 26 are performed. The MSC 540 releases an A/Iu-cs connection to reject a paging response sent from the UE 100. Subsequently, the BSS/RNS 300 releases a signaling connection for the CS domain.
26. As the signaling connection is released in operation 25, the UE 100 performs LAU or Combined RA/LA based on Network Modes of Operation (NMO). After LAU is performed, the MSC establishes a CS call for the UE 100.

When CS call setup is completed in operation 24 or 26, the UE 100 can make a voice call.

When the UE 100 stays in the GERAN and the PS service is suspended after a voice call is ended, the UE 100 resumes a PS service (for example, performs RAU or Combined RA/LA Update). Accordingly, the SGSN resumes the PS service and instructs the S-GW 520 to resume the P-GW 530 that suspended bearer(s). On the contrary, when the UE 100 goes back to the E-UTRAN after a voice call is ended, the UE 100 transmits a TAU Request message to the MME to resume a PS service. Accordingly, the MME resumes the PS service and instructs the S-GW 520 and the P-GW 530 to resume suspended bearer(s).

In FIG. 8b, FIG. 8c, FIG. 9b and FIG. 9c, the Suspend Notification message may be replaced with a Suspend Request message, and the Suspend Acknowledge message may be replaced with a Suspend Response message.

Further, the aforementioned CSFB procedures are based on a case where the PS HO is not supported, while a CSFB procedure in a case where the PS HO is supported is disclosed in 3GPP TS 23.401 and 3GPP TS 23.272.

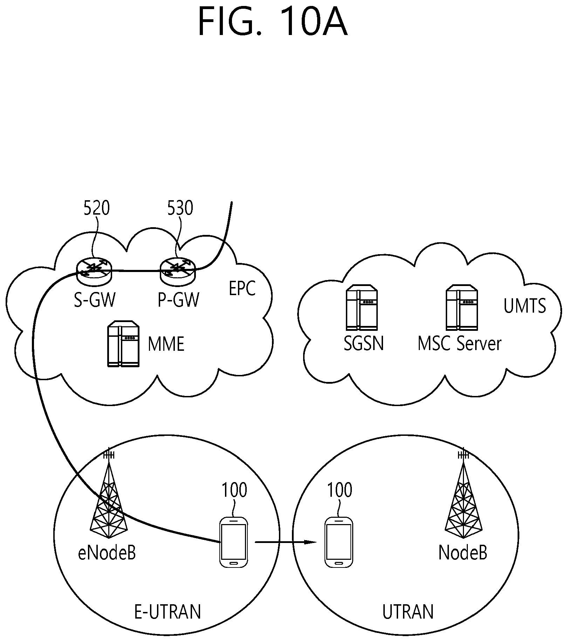

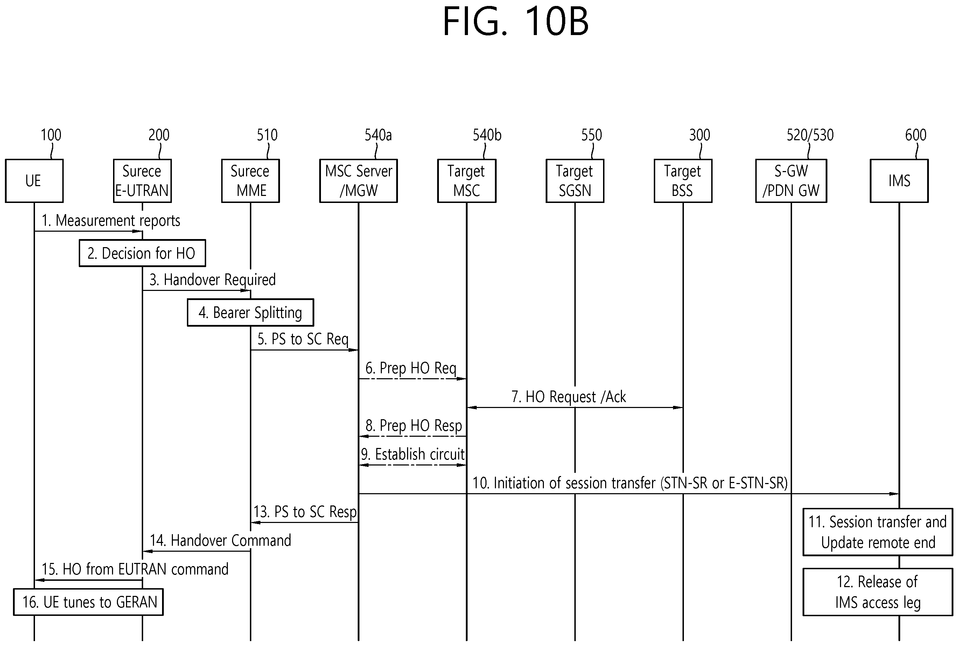

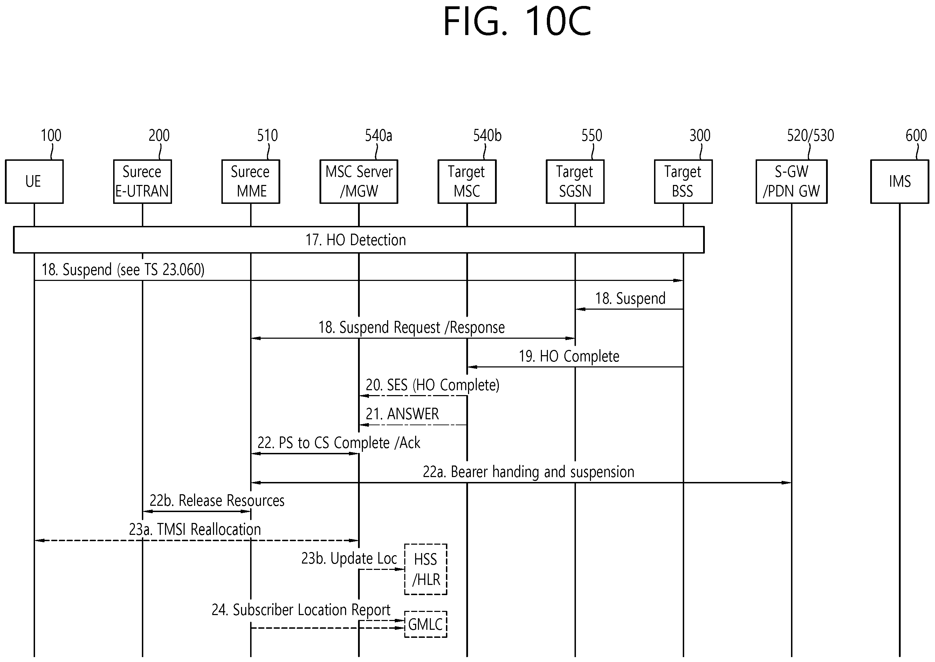

FIG. 10a illustrates the concept of Single Radio Voice Call Continuity (SRVCC), and FIG. 10b and FIG. 10c illustrate an example of an SRVCC procedure.

First, as illustrated in FIG. 10a, SRVCC refers to a technology which hands over a voice call to a dedicated CS communication network to continue a service when a UE 100 that is located in E-UTRAN coverage moves away from the E-UTRAN coverage to UTRAN coverage during the voice call.

FIG. 10b and FIG. 10c illustrate an SRVCC procedure from an E-UTRAN supporting no DTM to a GERAN.

Referring to FIG. 10b and FIG. 10c, the example of the SRVCC procedure in which a PS HO is not supported is illustrated as follows (details in clause 6.2.2.1 of 3GPP TS 23.216 are also cited).
1. The UE 100 may transmit measurement reports to a source E-UTRAN 200.
2. The source E-UTRAN 200 determines whether to trigger an SRVCC HO to a GERAN based on the measurement reports from the UE 100.
3. The source E-UTRAN 200 transmits a Handover Required message to a source MME 510.
4. The source MME 510 splits a voice bearer from a non-voice bearer and initiates a PS-CS HO based on QCI (QCI 1) associated with the voice bearer and an SRVCC HO indication.
5. The source MME 510 transmits an SRVCC PS to CS Request (IMSI, Target ID, STN-SR, C MSISDN, generic Source to Target Transparent Container, MM Context, and Emergency Indication) message to an MSC server 540a.
6. The MSC server 540a transmits a PS to CS handover request to a target MSC 540b.
7. The target MSC 540b performs resource allocation by exchanging Handover Request/ Acknowledge messages with a target BSS 300.
8. The target MSC 540b transmits a Prepare Handover Response message to the MSC server 540a.
9. Then, a circuit connection is established between the target MSC 540b and an MGW associated with the MSC server 540a.
10. In a non-emergency session, the MSC server 540a initiates a session transfer to an IMS using an STN-SR. In an emergency session, the MSC server 540a initiates a session transfer to the IMS using an E-STN-SR.
11. During the session transfer process, a remote end is updated.
12. A source IMS access leg is released according to TS 23.237. Here, operations 11 and 12 are performed independently of operation 13.
13. The MSC server 540a transmits an SRVCC PS to CS Response message to the source MME 510.
14. The source MME 510 transmits a Handover Command message to the source E-UTRAN 200.
15. The source E-UTRAN 200 sends an HO to the UE 100 from an E-UTRAN command message.
16. The UE 100 tunes to the GERAN.
17. An HO is detected in the target BSS 300.
18. The UE 100 starts a suspension process specified in clause 16.2.1.1.2 of TS 23.060. A target SGSN 550 transmits a Suspend Notification message to the source MME 510, and the source MME 510 transmits a Suspend Acknowledge message to the target SGSN 550. Operation 18 may be performed in parallel with operations 19 to 22.
19. The target BSS 300 transmits a Handover Complete message to the target MSC 540b. Operation 19 may be performed right after the detection of the HO in operation 17.
20. The target MSC 540b transmits an SES (Handover Complete) message to the MSC server 540a.
21. When an ISUP Answer message is transmitted to the MSC server 540a according to TS 23.009, an establishment procedure is completed.
22. The MSC server 540a transmits an SRVCC PS to CS Complete Notification message to the source MME 510, and the source MME 510 transmits an SRVCC PS to CS Complete Acknowledge message to the MSC server 540a.
   22a. Bearer handling and suspension
      The source MME 510 deactivates bearers used for a voice and other Guaranteed Bit Rates (GBR) bearers. The source MME 510 transmits a Suspend Notification message to the S-GW 520 to preserve and suspend a non-GRB bearer.
   22b. The source MME 510 transmits a resource release request to the source eNodeB 200. The eNodeB releases a resource related to the UE 100 and transmits a response to the resource release request to the source MME 510.
   23a. When a Home Location Register (HLR) is updated, the MSC server 540a starts Temporary Mobile Subscriber Identity (TMSI) reallocation for the UE 100. The TMSI reallocation is performed by the MSC server 540a through the target MSC 540b.
   23b. When the MSC server 540a successfully completes TMSI reallocation in operation 23a, the MSC server 540a performs MAP Update Location on an HSS/HLR.
24. When the HO is completed, the source MME 510 or MSC server 540a may send a Subscriber Location Report to a Gateway Mobile Location Center (GMLC) in an emergency services session.

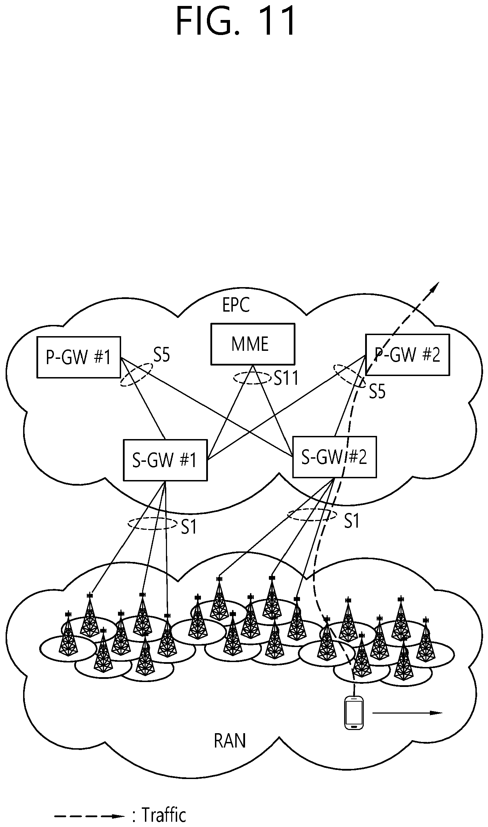

FIG. 11 illustrates the concept of Selected IP Traffic Offload (SIPTO) in the scenario of FIG. 7a.

As described above, despite UE movements, a P-GW selected in a PDN connection initially established is used, causing a problem of inefficiency in traffic transmission path and network management

To solve such a problem, various methods have been proposed to optimize a P-GW. For example, as illustrated in FIG. 11, when a UE is moving and a more optimal P-GW, that is, P-GW #2, appears, P-GW #2 is selected to establish a PDN connection to P-GW #2 instead of P-GW #1. That is, SIPTO has been proposed in which P-GW reselection or relocation is performed to route selected traffic (for example, Internet traffic) to a network node close to the UE's location (UE's point of attachment to the access network). Thus, traffic is transmitted through S-GW #1 and P-GW #1 in FIG. 7a. In FIG. 11, however, as the UE is moving, S-GW #2 capable of serving the UE's location is selected and P-GW #2 close to the UE's location is also selected, and accordingly traffic is transmitted and received through S-GW #2 and P-GW #2.

The foregoing SIPTPO technology has evolved according to 3GPP releases.

SIPTO is first standardized in 3GPP release 10, in which a seamless detour is not supported and thus a user faces temporary service disruption. A specific description is made as follows. First, when a UE moves to a different base station (BS), a target MME may reselect or relocate a more suitable P-GW for the current location of the UE (for example, a P-GW geographically or topologically closer to the location of the UE) according to a result of UE movement and may determine to redirect a PDN connection of the UE to the reselected (or relocated) P-GW. When the MME determines to reselect (or relocate) a P-GW, the MME performs a PDN disconnection procedure indicating "reactivation requested" to the UE with respect to a PDN connection to redirect. When the MME determines to relocate all PDN connections for the UE, the MME performs a detach procedure indicating "explicit detach with reattach required" to the UE.

However, when the UE has a running application during P-GW reselection (or relocation, that is, when the UE has traffic to transmit/receive via the original P-GW), a service may be temporarily suspended due to an IP address change of the UE by P-GW reselection (or relocation).

To prevent service disruption, 3GPP release 11 allows the MME to release a PDN connection in order to perform P-GW reselection (or relocation) by SIPTO only i) when the UE is in the idle mode or ii) while the UE is performing a TAU procedure in which no user-plane bearer is generated. Accordingly, when the UE is in the connected mode, even though another P-GW is more suitable for the current location of the UE location according to the mobility of UE, the MME does not perform reselection of (or relocation to) the other P-GW.

Meanwhile, in 3GPP release 13, studies are conducted into methods for reselecting (or relocating) a P-GW more suitable for the current location of a UE, while minimizing service disruption, even when the UE is in the connected mode.

In 3GPP release 13, such a method is called Co-ordinated Selected IP traffic Offload (CSIPTO). CSIPTO allows P-GW reselection (or relocation) through coordination between an MME and a UE.

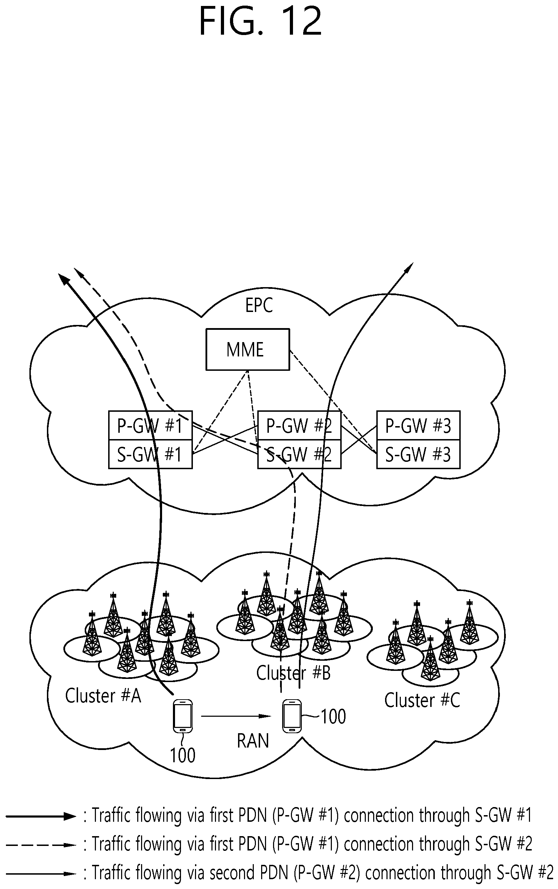

FIG. 12 illustrates a scenario of CSIPTO discussed in 3GPP release 13.

Referring to FIG. 12, when a UE 100 located in cluster #A requests a PDN connection to a specific Access Point Name (APN), an MME establishes a first PDN connection via P-GW #1, which is geographically closest to the current location of the UE, in order to optimize backhaul transmission on an EPC network.

Subsequently, the user of the UE 100 performs, using the first PDN connection, a long-lived service for which service continuity is essential, for example, a conference call.

Next, the UE 100 moves from cluster #A to cluster #B. The MME change the first PDN connection for the long-lived service of the UE 100 to be tunnelled through S-GW #2. Here, since the continuity of the first PDN connection for the long-lived service of the UE 100 is essential and the IP address of the UE 100 needs to be preserved, the MME maintains the PDN connection to P-GW #1 instead of reselecting (or relocating) P-GW #2 that is closest to the current location of the UE.

Meanwhile, when the UE 100 requests a new second PDN connection for a different short-lived service while maintaining the first PDN connection for the long-lived service via S-GW #2 and P-GW #1, the MME allows the second PDN connection to be tunnelled through P-GW #2. Here, when the UE 100 requests a new long-lived service, the MME does not generate a new second PDN connection but allows the UE to the first PDN connection via P-GW #1. The reason for not establishing a second PDN connection via P-GW #2 for a new long-lived service is to prevent multiple PDN connections based on the mobility of the UE from being distributed to different P-GWs.

Once the new second PDN connection via P-GW #2 is established, short-lived services other than the long-lived service are transmitted and received through the new second PDN connection via P-GW #2.

The first PDN connection via P-GW #1 is released only when the long-lived service is ended or it is impossible to maintain the first PDN connection.

Meanwhile, in FIG. 12, when the UE 100 moves from cluster #A to cluster #B, a path changed by the movement, that is, the first PDN connection via S-GW #2 and P-GW #1, may be called a sub-optimal PDN connection, and the newly established second PDN connection via S-GW #2 and P-GW #2 may be called an optimal PDN connection.

The definitions of optimal and sub-optional may be based on various criteria, such as geography, topology, and load balancing.

However, 3GPP release 13 discloses only an illustrative scenario of CSIPTO without specific methods for realizing CSIPTO.

In particular, no methods are disclosed for processing CSFB or SRVCC that occurs during an SIPTO service.

Hereinafter, embodiments of the present specification will be described in detail.

### <Embodiments of the present specification>

Embodiments of the present specification are intended to provide a method for a network entity (for example, an MME), which is responsible for a control plane in a mobile communication network, to process CSFB or SRVCC required during an SIPTO service.

The embodiment of the present invention includes a first embodiment of providing a method for processing CSFB required during an SIPTO service and a second embodiment of providing a method for processing SRVCC required during an SIPTO service.

In the following description, the embodiments of the present invention are classified into the first embodiment and the second embodiment.

### <First embodiment of the present specification>

The first embodiment of the present specification proposes a mechanism for efficiently providing CSFB when a CSIPTO is used in a mobile communication system, for example, the 3GPP EPS.

That is, as in the scenario illustrated in FIG. 12, in a case/state where the UE 100 generates an optimal PDN connection but a sub-optimal PDN connection is not deactivated/released for a service flow requiring IP address preservation, CSFB may occur.

Here, since there is no method for processing CSFB in the coexistence of the optimal PDN connection and the sub-optimal PDN connection described above, the first embodiment of the present specification proposes a mechanism for processing CSFB in a CSIPTO environment.

For reference, there may be in an MO CSFB case and in an MT CSFB case, and the first embodiment of the present specification is applied to both the MO case and the MT case. Further, there are a PS HO-supportive CSFB case and a PS HO-unsupportive CSFB case, and the first embodiment of the present specification proposes a CSFB processing method for both cases, that is, the PS HO-supportive case and the PS HO-unsupportive case. The conventional procedure and details of CSFB are specified in 3GPP TS 23.272.

An efficient CSFB providing mechanism in the CSIPTO environment according to the first embodiment of the present specification may be constructed with a combination of one or more of the following operations 1-1 to IV-1.

### 1-1. Storage of information on PDN connection

According to the first embodiment of the present invention, the MME may store information associated with SIPTO/CSIPTO about the optimal PDN connection (for example, the second PDN connection) and the sub-optimal PDN connection (for example, the first PDN connection).

Further, the MME may store separate context from context stored for the sub-optimal PDN connection when (or after) the optimal PDN connection is generated.

The MME may store/mark one or more pieces of information listed below with respect to the optimal PDN connection. Marking may mean configuring/setting the following pieces of information in a database/context associated with the PDN connection stored by the MME.
a) Information indicating that the PDN connection is optimal
b) Information indicating that the PDN connection is related to SIPTO/CSIPTO

Further, the MME may store/mark one or more pieces of information listed below with respect to the sub-optimal PDN connection.
A) Information indicating that the PDN connection is sub-optimal
B) Information indicating that the PDN connection is related to SIPTO/CSIPTO

### II-1. Operation of MME in PS HO-unsupportive CSFB procedure

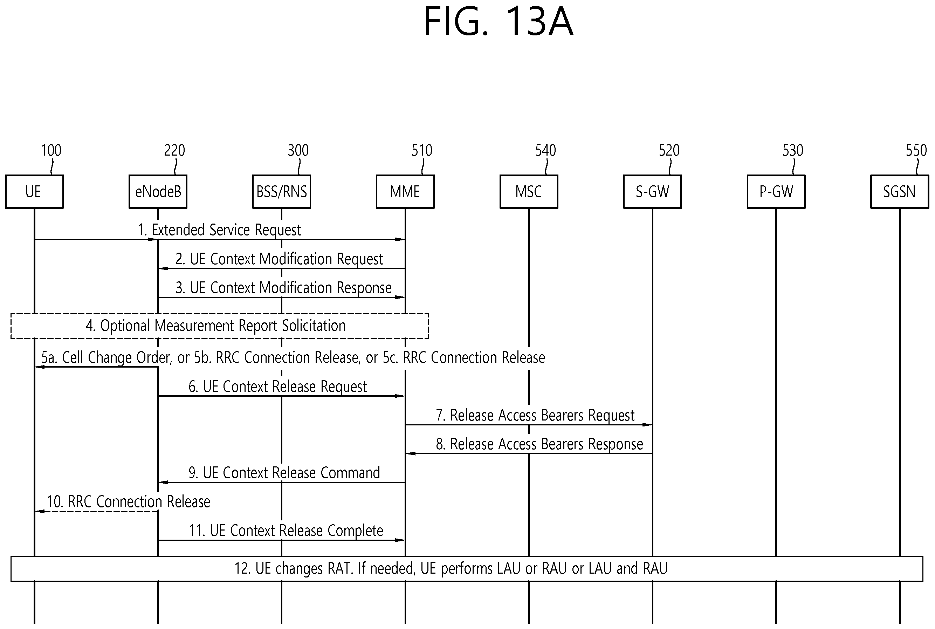

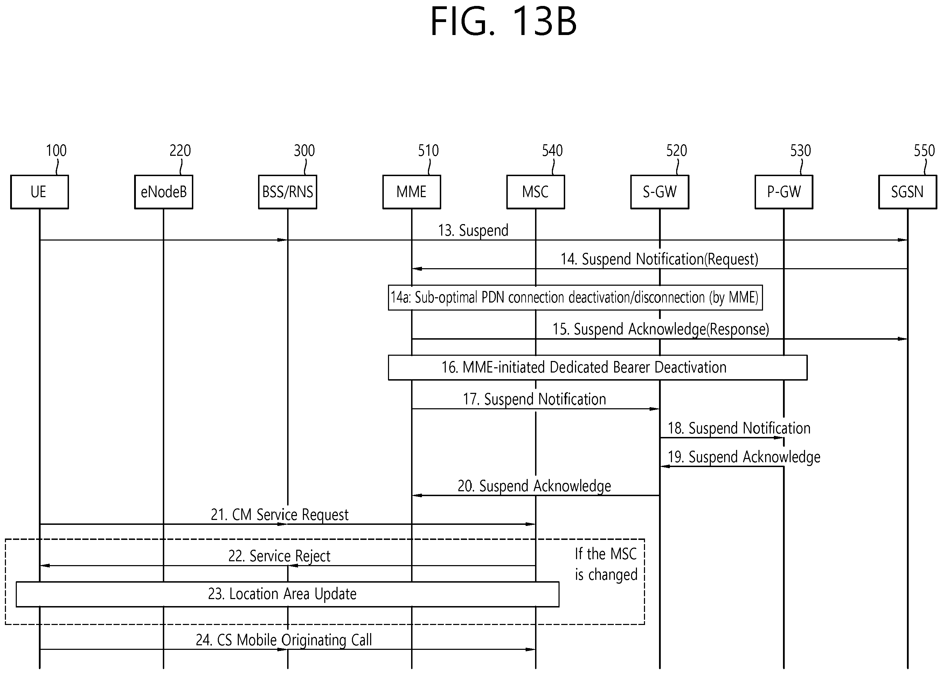

FIG. 13a and FIG. 13b illustrate a CSFB processing method during an SIPTO service according to the first embodiment of the present specification.

FIG. 13a and FIG. 13b illustrate an operation of the MME during a PS HO-unsupportive CSFB procedure according to the first embodiment of the present specification.

Referring to a and FIG. 13b, in the PS HO-unsupportive CSFB procedure, when the MME 510 receives a Suspend Request message from the SGSN serving the UE 100 (target SGSN or serving SGSN 550 in operation 14 of FIG. 13b), the MME 510 performs the following operations.

The order in which the following operations are listed does not refer to the order in which the operations are performed, and the order in which the operations are performed may be properly determined. Here, the following operations may be performed in parallel or sequentially.
1) The MME 510 deactivates/disconnects the sub-optimal PDN connection (in operation 14a of FIG. 13b).

To this end, the MME 510 transmits, to the S-GW 520, a message requesting the deactivation/disconnection of the sub-optimal PDN connection (for example, a Delete Session Request message including a default bearer ID (that is, Linked EPS Bearer ID (LBI)) of the sub-optimal PDN connection.

Upon receiving a response to the request from the S-GW 520, the MME 510 releases a resource for the PDN connection. Alternatively, before receiving the response from the S-GW 520, the MME 510 releases the resource for the PDN connection.

In PS HO-unsupportive CSFB, a PS service is suspended during a voice call. That is, service interruption occurs. Accordingly, it is no longer needed to maintain the sub-optimal PDN connection that is maintained to prevent service interruption caused by an IP address change when there is a service flow requiring IP address preservation at the initial generation of the optimal connection.

Maintaining the sub-optimal PDN connection for the PS service to be resumed after the end of the voice call causes an unnecessary waste of resources, and thus the sub-optimal connection is deactivated/disconnected in the first embodiment of the present specification.
2) When there is a GRB bearer(s) for the UE 100 performing the CSFB as in a conventional operation, the MME 510 deactivates the GRB bearer. This operation is performed for the PDN connection except for the sub-optimal PDN connection.
3) The MME 510 preserves and suspends a non-GRB bearer(s) for the UE performing the CSFB as in the conventional operation. This operation is performed for the PDN connection except for the sub-optimal PDN connection.
4) When the MME 510 stores/marks the information associated with SIPTO/CSIPTO (that is, a) to b)) about the optimal PDN connection in operation 1-1 described above, the MME 510 deletes/resets this information.

### III-1. Operation of MME in PS HO-supportive CSFB procedure

In the PS HO-supportive CSFB procedure, the MME operates as in [1-1] or [1-2] described below.
[1-1] In the PS HO-supportive CSFB procedure, when (or before) the MME 510 transmits a Forward Relocation Request message to the SGSN serving the UE 100 (target SGSN or serving SGSN 550), the MME 510 further performs the following operation in addition to the conventional operation.
   1) The MME 510 deletes information on the sub-optimal PDN connection from context of the UE 100 that the MME 510 stores, which may mean that the MME 510 locally releases a resource for the sub-optimal PDN connection. Further, the MME 510 does not include the information on the sub-optimal PDN connection in the Forward Relocation Request message transmitted to the target SGSN 550.
[1-2] In the PS HO-supportive CSFB procedure, when the MME 510 transmits the Forward Relocation Request message to the SGSN serving the UE 100 (target SGSN or serving SGSN 550), the MME 510 may include information on all PDN connections including the sub-optimal PDN connection in the message, in which information on the sub-optimal PDN connection may include the pieces of information A) and B) described above in operation 1-1. Additionally, the MME 510 may include, in the message, information indicating that the MME 510 supports SIPTO/CSIPTO and/or information indicating that there is a PDN connection associated with SIPTO/CSIPTO.

The MME 510 may always include the information on the sub-optimal PDN connection in the Forward Relocation Request message, may include the information on the sub-optimal PDN connection in the Forward Relocation Request message when knowing that the target SGSN 550 supports SIPTO/CSIPTO, or may include the information on the sub-optimal PDN connection in the Forward Relocation Request message when acquiring the supportability of SIPTO/CSIPTO from the target SGSN 550 supports and determining that the target SGSN 550 supports SIPTO/CSIPTO before the transmission of the Forward Relocation Request message to the target SGSN 550.

The foregoing operation may also be applied in an extended manner in a case where the MME 510 is changed by the mobility of the UE 100, not in CSFB. For example, in a case where the MME 510 is changed by a TAU procedure, when a previous MME (old MME) provides context about the UE 100 to a new MME (or target MME), the previous MME may include sup-optimal PDN connection information in the context when knowing that the new MME supports SIPTO/CSIPTO. The previous MME may know that the new MME supports SIPTO/CSIPTO since the supportability of SIPTO/CSIPTO by the new MME is set in the previous MME. Alternatively, the previous MME may acquire information on the supportability of SIPTO/CSIPTO from the new MME before transmitting the context and may transmit the context including the sub-optimal PDN connection information when the new MME supports SIPTO/CSIPTO.

### IV-1. Operation of UE during or after the PS HO-unsupportive CSFB procedure

The UE 100 recognizes that the PS HO is not supported due to CSFB. Subsequently, during or after the CSFB procedure, the UE 100 deactivates/disconnects the sub-optimal PDN connection as follows.
1) The UE 100 locally deactivates/disconnects the sub-optimal PDN connection. That is, the UE releases a resource for the PDN connection (related context, IP address, and the like).
2) Along with operation 1), the UE 100 additionally transmits information requesting the deactivation/disconnection of the sub-optimal PDN connection when sending the Suspend message to the SGSN 550 (operation 13 of FIG. 8c to FIG. 13b or operation 15 of FIG. 9c). When this information is received through the SGSN 550, the MME 510 may perform operation 1) described above in II-1 (operation 14a of FIG. 13b).

The foregoing operations 1) and 2) of the UE 100 may be performed at the same time, sequentially from 1) to 2), or sequentially from 2) to 1).

Although it has been described above that the MME 510 stores/marks various pieces of information related to SIPTO/CSIPTO in context by PDN connection, these pieces of information may be stored/marked by bearer. Alternatively, some information may be stored/marked by PDN connection, while some information may be store/marked by bearer. For example, instead of storing/marking information indicating that a sub-optimal PDN connection is sub-optimal, information indicating that each bearer belonging to this PDN connection is sub-optimal may be stored/marked.

### <Second embodiment of the present specification>

The second embodiment of the present specification proposes a mechanism for efficiently providing SRVCC when CSIPTO is used in a mobile communication system, for example, the 3GPP EPS.

That is, as in the scenario illustrated in FIG. 12, in a case/state where the UE 100 establishes an optimal PDN connection but a sub-optimal PDN connection is not deactivated/released due to the presence of a service flow requiring IP address preservation, SRVCC may occur. Since there is no method for processing SRVCC in the coexistence of the optimal PDN connection and the sub-optimal PDN connection described above, the first embodiment of the present specification proposes a mechanism for processing SRVCC in a CSIPTO environment.

For reference, there are a PS HO-supportive SRVCC case (SRVCC from E-UTRAN to UTRAN with PS HO or GERAN with DTM HO support) and a PS HO-unsupportive SRVCC case (SRVCC from E-UTRAN to GERAN without DTM support and SRVCC from E-UTRAN to GERAN with DTM but without DTM HO support and from E-UTRAN to UTRAN without PS HO), and the second embodiment of the present specification proposes a SRVCC processing method for both cases, that is, the PS HO-supportive case and the PS HO-unsupportive case. The conventional procedure and details of SRVCC are specified in 3GPP TS 23.216.

An efficient SRVCC providing mechanism in the CSIPTO environment according to the second embodiment of the present specification may be constructed with a combination of one or more of the following operations 1-2 to IV-2.

### 1-2. Storage of information on PDN connection

According to the second embodiment of the present invention, the MME may store information associated with SIPTO/CSIPTO about the optimal PDN connection (for example, the second PDN connection) and the sub-optimal PDN connection (for example, the first PDN connection).

The MME 510 may store separate context from context stored for the sub-optimal PDN connection when (or after) the optimal PDN connection is established.

The MME 510 may store/mark one or more pieces of information listed below with respect to the optimal PDN connection. Marking may mean configuring/setting the following pieces of information in a database/context associated with the PDN connection stored by the MME 510.
a) Information indicating that the PDN connection is optimal
b) Information indicating that the PDN connection is related to SIPTO/CSIPTO

Further, the MME 510 may store/mark one or more pieces of information listed below with respect to the sub-optimal PDN connection.
A) Information indicating that the PDN connection is sub-optimal
B) Information indicating that the PDN connection is related to SIPTO/CSIPTO

### II-2. Operation of MME in PS HO-unsupportive SRVCC procedure

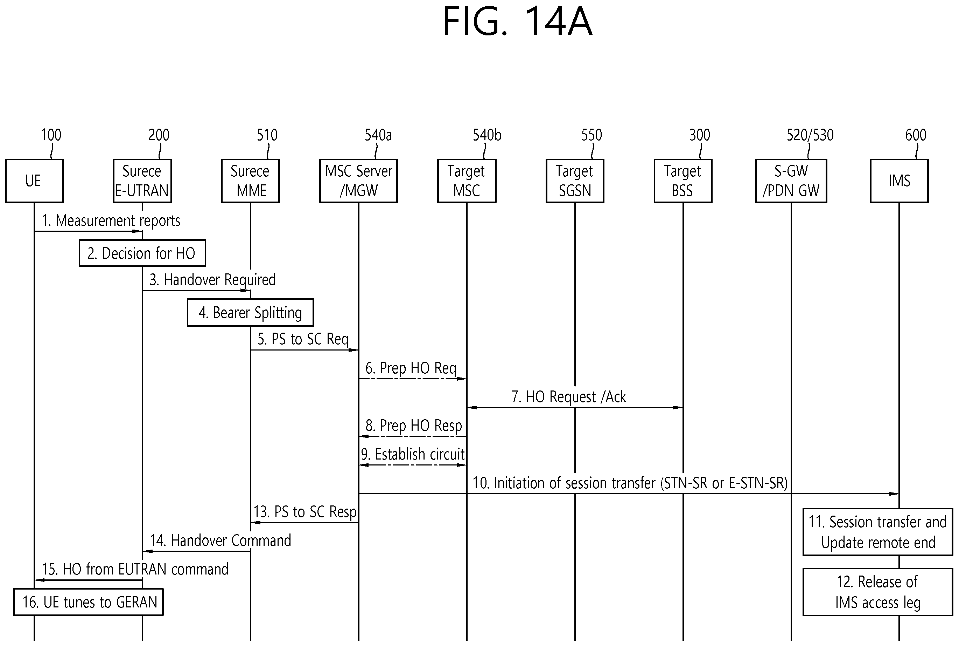

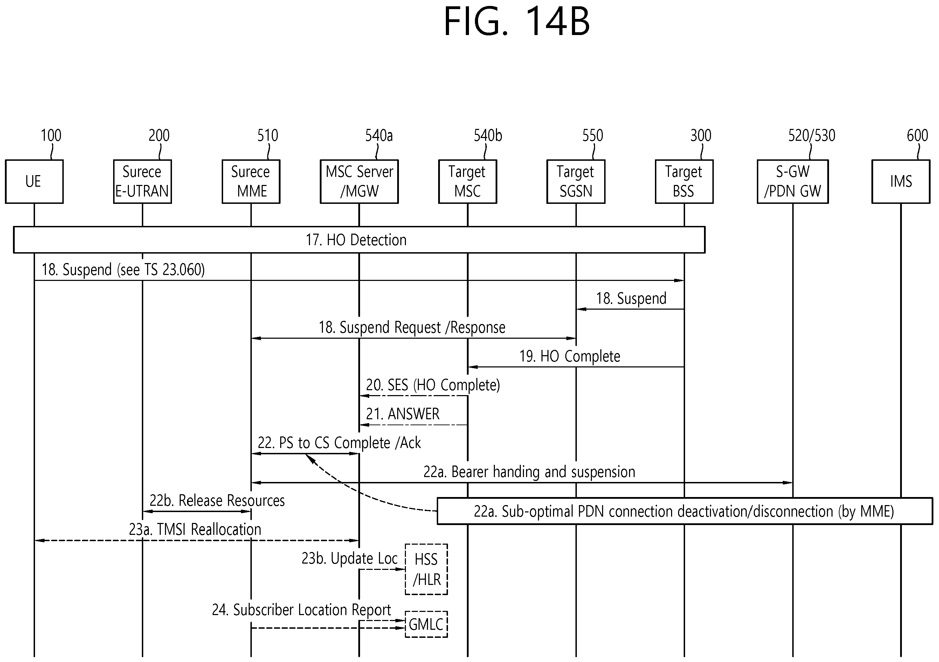

FIG. 14a and FIG. 14b illustrate a SRVCC processing method during an SIPTO service according to the second embodiment of the present specification.

FIG. 14a and FIG. 14b illustrates an operation of the MME during a PS HO-unsupportive SRVCC procedure according to the second embodiment of the present specification.

Referring to FIG. 14a and FIG. 14b, in the PS HO-unsupportive SRVCC procedure, when the MME 510 receives an SRVCC PS to CS Complete Notification message from the MSC server 540a serving the UE 100 (operation 22 of FIG. 14b), the MME 510 performs the following operations.

The order in which the following operations are listed does not refer to the order in which the operations are performed, and the order in which the operations are performed may be properly determined. Here, the following operations may be performed in parallel or sequentially.
1) The MME 510 deactivates/disconnects the sub-optimal PDN connection (in operation 22a of FIG. 14b).

To this end, the MME 510 transmits, to the S-GW 520, a message requesting the deactivation/disconnection of the sub-optimal PDN connection (for example, a Delete Session Request message including a default bearer ID (that is, LBI) of the sub-optimal PDN connection.

Upon receiving a response to the request from the S-GW 520, the MME 510 releases a resource for the PDN connection. Alternatively, before receiving the response from the S-GW 520, the MME 510 releases the resource for the PDN connection.

In PS HO-unsupportive SRVCC, a PS service is suspended during a voice call. That is, service interruption occurs. Accordingly, it is no longer needed to maintain the sub-optimal PDN connection that is maintained to prevent service interruption caused by an IP address change when there is a service flow requiring IP address preservation at the initial generation of the optimal connection. Maintaining the sub-optimal PDN connection for the PS service to be resumed after the end of the voice call causes an unnecessary waste of resources, and thus the sub-optimal connection is deactivated/disconnected in the second embodiment of the present specification.
2) The MME 510 deactivates a GRB bearer(s) used for a voice for the UE 100 performing the SRVCC as in a conventional operation. Further, when there is a GBR bearer(s) other than the bearer(s) used for the voice, the MME 510 deactivates this GRB(s). These operations are performed for the PDN connection except for the sub-optimal PDN connection.
3) The MME 510 preserves and suspends a non-GRB bearer(s) for the UE performing the SRVCC as in the conventional operation. This operation is performed for the PDN connection except for the sub-optimal PDN connection.
4) When the MME 510 stores/marks the information associated with SIPTO/CSIPTO (that is, a) and b)) about the optimal PDN connection in operation 1-1 described above, the MME 510 deletes/resets this information.

### III-2. Operation of MME in PS HO-supportive SRVCC procedure

In the PS HO-supportive SRVCC procedure, the MME operates as in [2-1] or [2-2] described below.
[2-1] In the PS HO-supportive SRVCC procedure, when (or before) the MME 510 transmits a Forward Relocation Request message to the SGSN serving the UE 100 (target SGSN or serving SGSN 550), the MME 510 further performs the following operation in addition to the conventional operation.
   1) The MME 510 deletes information on the sub-optimal PDN connection from context of the UE 100 that the MME 510 stores, which may mean that the MME 510 locally releases a resource for the sub-optimal PDN connection. Further, the MME 510 does not include the information on the sub-optimal PDN connection in the Forward Relocation Request message transmitted to the target SGSN 550.
[2-2] In the PS HO-supportive SRVCC procedure, when the MME 510 transmits the Forward Relocation Request message to the SGSN serving the UE 100 (target SGSN or serving SGSN 550), the MME 510 may include information on all PDN connections including the sub-optimal PDN connection in the message, in which information on the sub-optimal PDN connection may include the pieces of information A) and B) described above in operation 1-2. Additionally, the MME 510 may include, in the message, information indicating that the MME 510 supports SIPTO/CSIPTO and/or information indicating that there is a PDN connection associated with SIPTO/CSIPTO.

The MME 510 may always include the information on the sub-optimal PDN connection in the Forward Relocation Request message, may include the information on the sub-optimal PDN connection in the Forward Relocation Request message when knowing that the target SGSN 550 supports SIPTO/CSIPTO, or may include the information on the sub-optimal PDN connection in the Forward Relocation Request message when acquiring the supportability of SIPTO/CSIPTO from the target SGSN 550 supports and determining that the target SGSN 550 supports SIPTO/CSIPTO before the transmission of the Forward Relocation Request message to the target SGSN 550.

### IV-2. Operation of UE during or after the PS HO-unsupportive SRVCC procedure

The UE 100 recognizes that the PS HO is not supported due to the SRVCC procedure. Subsequently, during or after the SRVCC procedure, the UE 100 deactivates/disconnects the sub-optimal PDN connection as follows.
1) The UE 100 locally deactivates/disconnects the sub-optimal PDN connection. That is, the UE releases a resource for the PDN connection (related context, IP address, and the like).
2) Along with operation 1), the UE 100 additionally transmits information requesting the deactivation/disconnection of the sub-optimal PDN connection when sending the Suspend message to the SGSN 550 (operation 18 of FIG. 10c to FIG. 14b). When this information is received through the SGSN 550, the MME 510 may perform operation 1) described above in II-2 (operation 22a of FIG. 14b).

The foregoing operations 1) and 2) of the UE 100 may be performed at the same time, sequentially from 1) to 2), or sequentially from 2) to 1).

Although it has been described above that the MME 510 stores/marks various pieces of information related to SIPTO/CSIPTO in context by PDN connection, these pieces of information may be stored/marked by bearer. Alternatively, some information may be stored/marked by PDN connection, while some information may be store/marked by bearer. For example, instead of storing/marking information indicating that a sub-optimal PDN connection is sub-optimal, information indicating that each bearer belonging to this PDN connection is sub-optimal may be stored/marked.

Further, the foregoing description focuses on SRVCC for a voice call, the second embodiment of the present invention may also be applied in an extended manner to SRVCC for a video call (that is, vSRVCC).

The aforementioned details in 1-2 and III-2 are also applicable in an Inter-RAT PS HO from the E-UTRAN to the UTRAN or GERAN, not in the SRVCC scenario.

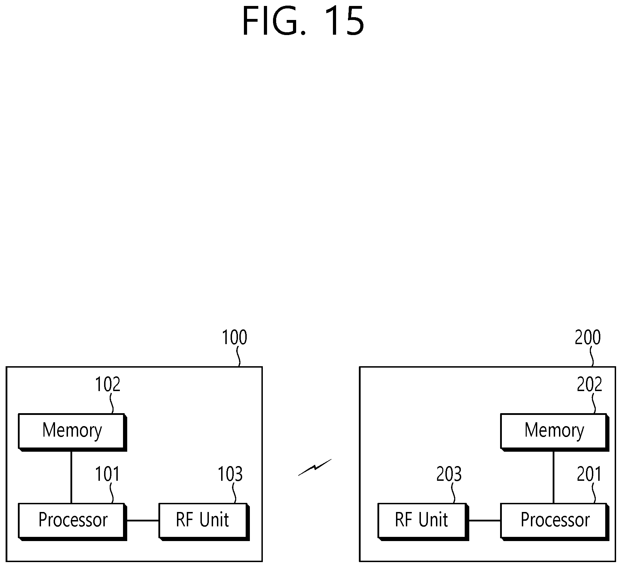

The aforementioned details may be implemented in hardware, which is described with reference to FIG. 15.

FIG. 15 is a block diagram illustrating a configuration of the UE 100 and the MME 510 according to one embodiment of the present invention.

As illustrated in FIG. 15, the UE 100 includes a storage means 101, a controller/processor 102, and a transceiver 103. The MME 510 includes a storage means 511, a controller/processor 512, and a transceiver 513.

The storage means 101 and 511 store the foregoing methods.

The controllers 102 and 512 control the storage means 101 and 511 and the transceivers 103 and 513. Specifically, the controllers 102 and 512 perform the foregoing methods stored in the storage means 101 and 511. The controllers 102 and 512 transmit the foregoing signals through the transceivers 103 and 513.

A network entity (for example, an MME) according to one embodiment of the present specification is a network entity that is responsible for a control plane in a mobile communication network and processes CSFB or SRVCC during an SIPTO service in a network entity and may include a transceiver and a controller to establish a second PDN connection according to an usage of the SIPTO service in a state where a first PDN connection is established for a UE through the transceiver, while maintaining the first PDN connection, to determine any one PDN connection to release among the first PDN connection and the second PDN connection when CSFB or SRVCC is requested, and to release the determined PDN connection.

The determined PDN connection may be the first PDN connection.

The network entity may further include a storage means to store, as context information on the UE, information indicating that the first PDN connection is a sub-optimal PDN connection and is associated with the SIPTO service, and to store, as context information on the UE, information indicating that the second PDN connection is an optimal PDN connection and is associated with the SIPTO service.

The controller may delete the information on the first PDN connection from the context information when a PS handover is supported and thus a Forward Relocation Request message needs to be transmitted to another network entity.

The controller may deactivate or release the determined PDN connection when a PS handover is not supported during a CSFB procedure and thus a Suspend Request message is received from another network entity.

The controller may deactivate or release the determined PDN connection when a PS handover is not supported during an SRVCC procedure and thus a SRVCC PS to CS Complete Notification message is received from another network entity.

Although exemplary embodiments of the present invention have been illustrated above, the scope of the present invention is not limited by these specific embodiments. Therefore, the present invention may be changed, modified, or adapted variously without departing from the appended claims.

## Claims

1. A method for processing Circuit Switched Fall Back, CSFB, or Single Radio Voice Call Continuity, SRVCC, during a Selected IP Traffic Offload, or a Coordinated Selected IP Traffic Offload, SIPTO/CSIPTO, service, the method performed by a mobility management entity, MME, and the method comprising:
establishing a second Public Data Network, PDN, connection for a user equipment, UE, moving from a first location to a second location,
according to an usage of the SIPTO/CSIPTO service after a first PDN connection for the UE is established,
wherein the first PDN connection is established with a first PDN gateway, P-GW, which is geographically closest to the first location of the UE and the second PDN connection is established with a second P-GW, which is geographically closest to the second location of the UE,
wherein after establishing the second PDN connection for a short-lived service, the first PDN connection is maintained for guaranteeing a service continuity of a long-lived service,
storing context information indicating that the first PDN connection is sub-optimal and it is related to SIPTO/CSIPTO,
storing context information indicating that the second PDN connection is optimal and it is related to SIPTO/CSIPTO,
when CSFB or SRVCC is requested and a packet switched, PS, handover is supported, based on the stored context information, deactivating the suboptimal PDN connection; and
when CSFB or SRVCC is requested and a packet switched, PS, handover is not supported, deleting information on the sub-optimal PDN connection from the context of the UE stored in the MME.

2. The method of claim 1, further comprising:
transmitting, to a Service General Packet Radio Service, GPRS, Support Node, SGSN, serving the UE, information indicating that the second PDN connection is an optimal PDN connection and is associated with the SIPTO/CSIPTO service.

3. The method of claim 1,
wherein the information on the sub-optimal PDN connection is deleted from the context information when a packet-switched, PS, handover is supported and thus a Forward Relocation Request message needs to be transmitted to a Service General Packet Radio Service, GPRS, Support Node, SGSN, serving the UE.

4. The method of claim 3, wherein the Forward Relocation Request message comprises no information on the sub-optimal PDN connection.

5. The method of claim 1, wherein the sub-optimal PDN connection is released when a PS handover is not supported during a CSFB procedure and thus a Suspend Request message is received from a Service General Packet Radio Service, GPRS, Support Node, SGSN, serving the UE.

6. The method of claim 1, wherein the sub-optimal PDN connection is released when a PS handover is not supported during an SRVCC procedure and thus a SRVCC PS to CS Complete Notification message is received from a Service General Packet Radio Service, GPRS, Support Node, SGSN, serving the UE.

7. The method of claims 5 or 6, wherein the releasing of the sub-optimal PDN connection comprises:
transmitting a message requesting release of the sub-optimal PDN connection to a network node; and
releasing a resource for the sub-optimal PDN connection.

8. The method of claim 7, wherein the releasing of the sub-optimal PDN connection further comprises
receiving a response to the message requesting the release of the sub-optimal PDN connection from the network node, and
wherein the resource for the sub-optimal PDN connection is released when the response to the message requesting the release of the sub-optimal PDN connection is received.

9. The method of claim 7, wherein the response to the message requesting the release of the sub-optimal PDN connection is a Delete Session Request message comprising a default bearer ID of the sub-optimal PDN connection.

10. The method of claim 1, wherein the UE releases the sub-optimal PDN connection when it is recognized that a PS handover is not supported during a CSFB or SRVCC procedure, and the releasing of the sub-optimal PDN connection is releasing a resource for the sub-optimal PDN connection.

11. The method of claim 10, wherein the UE additionally transmits information requesting release of the sub-optimal PDN connection when transmitting a Suspend message to a Service General Packet Radio Service, GPRS, Support Node, SGSN, serving the UE.

12. A mobility management entity, MME, for processing Circuit Switched Fall Back, CSFB, or Single Radio Voice Call Continuity, SRVCC, during a Selected IP Traffic Offload, or a Coordinated Selected IP Traffic Offload, SIPTO/CSIPTO, service, the MME comprising:
a transceiver (103); and
a controller (101) configured to:
establish a second Public Data Network, PDN, connection for a user equipment, UE, moving from a first location to a second location, according to an usage of the SIPTO/CSIPTO service after a first PDN connection for the UE is established, wherein the first PDN connection is established with a first PDN gateway, P-GW, which is geographically closest to the first location of the UE, and the second PDN connection is established with a second P-GW, which is geographically closest to the second location of the UE,
after establishing the second PDN connection for a short-lived service, maintain the first PDN connection for guaranteeing a service continuity of a long-lived service,
store context information indicating that the first PDN connection is sub-optimal and it is related to SIPTO/CSIPTO,
store context information indicating that the second PDN connection is optimal and it is related to SIPTO/CSIPTO,
when CSFB or SRVCC is requested and a packet switched, PS, handover is supported, based on the stored context information, deactivate the suboptimal PDN connection; and
when CSFB or SRVCC is requested and a packet switched, PS, handover is not supported, delete information on the sub-optimal PDN connection from the context of the UE stored in the MME.

13. The MME of claim 12,
wherein the controller is further configured to transmit, to a Service General Packet Radio Service, GPRS, Support Node, SGSN, serving the UE, information indicating that the second PDN connection is an optimal PDN connection and is associated with the SIPTO/CSIPTO service.

14. The MME of claim 12,
wherein the controller is further configured to release the sub-optimal PDN connection when a PS handover is not supported during a CSFB procedure and thus a Suspend Request message is received from a Service General Packet Radio Service, GPRS, Support Node, SGSN, serving the UE, or
wherein the controller is further configured to release the sub-optimal PDN connection when a PS handover is not supported during an SRVCC procedure and thus a SRVCC PS to CS Complete Notification message is received from the Service General Packet Radio Service, GPRS, Support Node, SGSN, serving the UE.

15. The MME of claim 14, wherein the controller, when releasing the sub-optimal PDN connection, is further configured to:
transmit a message requesting release of the sub-optimal PDN connection to a network node; and
release a resource for the sub-optimal PDN connection.

## Patentansprüche

1. Verfahren zur Verarbeitung des Rückgriffs auf Leitungsvermittlung, CSFB, oder der Stetigkeit eines einzelnen Funksprachrufs, SRVCC, während eines ausgewählten IP-Verkehrsauslagerungs-, oder eines koordinierten ausgewählten IP-Verkehrsauslagerungs-, SIPTO/CSIPTO-, Dienstes, wobei das Verfahren von einer Mobilitätsverwaltungseinheit, MME, durchgeführt wird und das Verfahren aufweist:
Einrichten einer zweiten öffentlichen Datennetzwerk-, PDN-, Verbindung für ein Benutzergerät, UE, das sich von einem ersten Standort zu einem zweiten Standort bewegt,
gemäß einer Nutzung des SIPTO/CSIPTO-Dienstes, nachdem eine erste PDN-Verbindung für das UE eingerichtet ist,
wobei die erste PDN-Verbindung mit einem ersten PDN-Gateway, P-GW, eingerichtet wird, das geographisch am nächsten zu dem ersten Standort des UE ist, und die zweite PDN-Verbindung mit einem zweiten PDN-Gateway P-GW eingerichtet wird, das geographisch am nächsten zu dem zweiten Standort des UE ist,
wobei nach dem Einrichten der zweiten PDN-Verbindung für einen kurzzeitigen Dienst, die erste PDN-Verbindung aufrechterhalten wird, um eine Dienststetigkeit eines langlebigen Dienstes sicherzustellen,
Speichern von Kontextinformation, die anzeigt, dass die erste PDN-Verbindung nicht optimal ist und sie SIPTO/CSIPTO betrifft,
Speichern von Kontextinformation, die anzeigt, dass die zweite PDN-Verbindung optimal ist und sie SIPTO/CSIPTO betrifft,
wenn CSFB oder SRVCC angefordert wird und eine paketvermittelte, PS-, Weitergabe unterstützt wird, Deaktivieren der nicht optimalen PDN-Verbindung basierend auf den gespeicherten Kontextinformationen; und
wenn CSFB oder SRVCC angefordert wird und eine paketvermittelte, PS-, Weitergabe nicht unterstützt wird, Löschen von Informationen über die nicht optimale PDN-Verbindung aus dem in der MME gespeicherten Kontext des UE.

2. Verfahren nach Anspruch 1, das ferner aufweist:
Übertragen von Informationen, die anzeigen, dass die zweite PDN-Verbindung eine optimale PDN-Verbindung ist und den SIPTO/CSIPTO-Dienst betrifft, an einen allgemeinen Paketfunkdienst-, GPRS-, Unterstützungsknoten, SGSN, der das UE betreut.

3. Verfahren nach Anspruch 1,
wobei die Informationen über die nicht optimale PDN-Verbindung aus der Kontextinformation gelöscht werden, wenn eine paketvermittelte, PS-, Weitergabe unterstützt wird, und somit eine Standortwechselanforderungsweiterleitungsnachricht an einen allgemeinen Paketfunkdienst-, GPRS-, Unterstützungsknoten SGSN, der das UE betreut, übertragen werden muss.

4. Verfahren nach Anspruch 3, wobei die Standortwechselanforderungsweiterleitungsnachricht keine Information über die nicht optimale PDN-Verbindung aufweist.

5. Verfahren nach Anspruch 1, wobei die nicht optimale PDN-Verbindung abgebaut wird, wenn während eines CSFB-Verfahrens eine PS-Weitergabe nicht unterstützt wird, und somit eine Unterbrechungsanforderungsnachricht von einem allgemeinen Paketfunkdienst-, GPRS-, Unterstützungsknoten, SGSN, der das UE betreut, empfangen wird.

6. Verfahren nach Anspruch 1, wobei die nicht optimale PDN-Verbindung abgebaut wird, wenn während eines SRVCC-Verfahrens eine PS-Weitergabe nicht unterstützt wird, und somit von einem allgemeinen Paketfunkdienst-, GPRS-, Unterstützungsknoten, SGSN, der das UE betreut, eine SRVCC-PS-zu-CS-Abschlussbenachrichtigungsmeldung empfangen wird.

7. Verfahren nach den Ansprüchen 5 oder 6, wobei der Abbau der nicht optimalen PDN-Verbindung aufweist:
Übertragen einer Nachricht, die den Abbau der nicht optimalen PDN-Verbindung anfordert, an einen Netzwerkknoten; und
Freigeben einer Ressource für die nicht optimale PDN-Verbindung.

8. Verfahren nach Anspruch 7, wobei der Abbau der nicht optimalen PDN-Verbindung ferner aufweist:
Empfangen einer Antwort auf die Nachricht, welche den Abbau der nicht optimalen PDN-Verbindung anfordert, von dem Netzwerkknoten, und
wobei die Ressource für die nicht optimale PDN-Verbindung freigegeben wird, wenn die Antwort auf die Nachricht, welche den Abbau der nicht optimalen PDN-Verbindung anfordert, empfangen wird.

9. Verfahren nach Anspruch 7, wobei die Antwort auf die Nachricht, welche den Abbau der nicht optimalen PDN-Verbindung anfordert, eine Sitzungslöschungsanforderungsnachricht ist, die eine Vorgabe-Träger-ID der nicht optimalen PDN-Verbindung aufweist.

10. Verfahren nach Anspruch 1, wobei das UE die nicht optimale PDN-Verbindung abbaut, wenn erkannt wird, dass während eines CSFB- oder SRVCC-Verfahrens keine PS-Weitergabe unterstützt wird, und wobei der Abbau der nicht optimalen PDN-Verbindung eine Ressource für die nicht optimale PDN-Verbindung freigibt.

11. Verfahren nach Anspruch 10, wobei das UE zusätzlich Informationen überträgt, die den Abbau der nicht optimalen PDN-Verbindung anfordern, wenn eine Unterbrechungsnachricht an einen allgemeinen Paketfunkdienst-, GPRS-, Unterstützungsknoten SGSN, der das UE betreut, übertragen wird.

12. Mobilitätsverwaltungseinheit, MME, für die Verarbeitung des Rückgriffs auf Leitungsvermittlung, CSFB, oder der Stetigkeit eines einzelnen Funksprachrufs SRVCC während eines ausgewählten IP-Verkehrsauslagerungs-, oder eines koordinierten ausgewählten IP-Verkehrsauslagerungs-, SIPTO/CSIPTO-, Dienstes, wobei die MME aufweist:
einen Transceiver (103); und
eine Steuerung (101), die konfiguriert ist, um:
eine zweite öffentliche Datennetzwerk-, PDN-, Verbindung für ein Benutzergerät UE, das sich von einem ersten Standort zu einem zweiten Standort bewegt, gemäß einer Nutzung des SIPTO/CSIPTO-Dienstes, nachdem eine erste PDN-Verbindung für das UE eingerichtet ist, einzurichten, wobei die erste PDN-Verbindung mit einem ersten PDN-Gateway P-GW eingerichtet wird, das geographisch am nächsten zu dem ersten Standort des UE ist, und die zweite PDN-Verbindung mit einem zweiten PDN-Gateway P-GW eingerichtet wird, das geographisch am nächsten zu dem zweiten Standort des UE ist,
nach dem Einrichten der zweiten PDN-Verbindung für einen kurzzeitigen Dienst, Aufrechterhalten der ersten PDN-Verbindung, um eine Dienststetigkeit eines langlebigen Dienstes sicherzustellen,
Kontextinformation, die anzeigt, dass die erste PDN-Verbindung nicht optimal ist und sie SIPTO/CSIPTO betrifft, zu speichern,
Kontextinformation, die anzeigt, dass die zweite PDN-Verbindung optimal ist und sie SIPTO/CSIPTO betrifft, zu speichern,
wenn CSFB oder SRVCC angefordert wird und eine paketvermittelte, PS-, Weitergabe unterstützt wird, die nicht optimale PDN-Verbindung basierend auf den gespeicherten Kontextinformationen zu deaktivieren; und
wenn CSFB oder SRVCC angefordert wird und eine paketvermittelte, PS-, Weitergabe nicht unterstützt wird, Informationen über die nicht optimale PDN-Verbindung aus dem in der MME gespeicherten Kontext des UE zu löschen.

13. MME nach Anspruch 12,
wobei die Steuerung ferner konfiguriert ist, um Informationen, die anzeigen, dass die zweite PDN-Verbindung eine optimale PDN-Verbindung ist und den SIPTO/CSIPTO-Dienst betrifft, an einen allgemeinen Paketfunkdienst-, GPRS-, Unterstützungsknoten SGSN, der das UE betreut, zu übertragen.

14. MME nach Anspruch 12,
wobei die Steuerung ferner konfiguriert ist, um die nicht optimale PDN-Verbindung abzubauen, wenn während eines CSFB-Verfahrens eine PS-Weitergabe nicht unterstützt wird, und somit eine Unterbrechungsanforderungsnachricht von einem allgemeinen Paketfunkdienst-, GPRS-, Unterstützungsknoten, SGSN, der das UE betreut, empfangen wird, oder
wobei die Steuerung ferner konfiguriert ist, um die nicht optimale PDN-Verbindung abzubauen, wenn während eines SRVCC-Verfahrens keine PS-Weitergabe unterstützt wird, und somit eine SRVCC-PS-zu-CS-Abschlussbenachrichtigungsmeldung von dem allgemeinen Paketfunkdienst-, GPRS-, Unterstützungsknoten SGSN, der das UE betreut, empfangen wird.

15. MME nach Anspruch 14, wobei die Steuerung, wenn sie die nicht optimale PDN-Verbindung abbaut, ferner konfiguriert ist, um:
eine Nachricht, die den Abbau der nicht optimalen PDN-Verbindung anfordert, an einen Netzwerkknoten zu übertragen; und
eine Ressource für die nicht optimale PDN-Verbindung freizugeben.

## Revendications

1. Procédé pour traiter un repli à commutation de circuits, CSFB, ou une continuité d'appel vocal radio unique, SRVCC, pendant un service de déchargement de trafic IP sélectionné ou de déchargement de trafic IP sélectionné coordonné, SIPTO/CSIPTO, le procédé étant effectué par une entité de gestion de mobilité, MME, et le procédé comprenant :
l'établissement d'une seconde connexion de réseau public de données, PDN, pour un équipement utilisateur, UE, se déplaçant d'une première localisation à une seconde localisation, selon une utilisation du service SIPTO/CSIPTO après qu'une première connexion PDN pour l'UE est établie,
dans lequel la première connexion PDN est établie avec une première passerelle PDN, P-GW, qui est géographiquement la plus proche de la première localisation de l'UE et la seconde connexion PDN est établie avec une seconde P-GW, qui est géographiquement la plus proche de la seconde localisation de l'UE,
dans lequel après l'établissement de la seconde connexion PDN pour un service à courte durée de vie, la première connexion PDN est maintenue pour garantir une continuité de service d'un service à longue durée de vie,
le stockage d'informations de contexte indiquant que la première connexion PDN est sous-optimale et qu'elle est liée à SIPTO/CSIPTO,
le stockage d'informations de contexte indiquant que la seconde connexion PDN est optimale et qu'elle est liée à SIPTO/CSIPTO,
lorsque CSFB ou SRVCC est demandé et qu'un transfert à commutation de paquets, PS, est supporté, sur la base des informations de contexte stockées, la désactivation de la connexion PDN sous-optimale ; et
lorsque CSFB ou SRVCC est demandé et qu'un transfert à commutation de paquets, PS, n'est pas supporté, la suppression d'informations sur la connexion PDN sous-optimale du contexte de l'UE stocké dans la MME.

2. Procédé selon la revendication 1, comprenant en outre :
l'émission, a un noeud de support de service général de radiocommunication par paquets, GPRS, de service, SGSN, desservant l'UE, d'informations indiquant que la seconde connexion PDN est une connexion PDN optimale et est associée au service SIPTO/CSIPTO.

3. Procédé selon la revendication 1,
dans lequel les informations sur la connexion PDN sous-optimale sont supprimées des informations de contexte lorsqu'un transfert à commutation de paquets, PS, est supporté et ainsi un message de réacheminement de demande de relocalisation a besoin d'être émis à un noeud de support de service général de radiocommunication par paquets, GPRS, de service, SGSN, desservant l'UE.

4. Procédé selon la revendication 3, dans lequel le message de réacheminement de demande de relocalisation ne comprend aucune information sur la connexion PDN sous-optimale.

5. Procédé selon la revendication 1, dans lequel la connexion PDN sous-optimale est libérée lorsqu'un transfert PS n'est pas supporté pendant une procédure CSFB et ainsi un message de suspension de demande est reçu d'un noeud de support de service général de radiocommunication par paquets, GPRS, de service, SGSN, desservant l'UE.

6. Procédé selon la revendication 1, dans lequel la connexion PDN sous-optimale est libérée lorsqu'un transfert PS n'est pas supporté pendant une procédure SRVCC et ainsi un message de notification d'achèvement de SRVCC PS à CS est reçu d'un noeud de support de service général de radiocommunication par paquets, GPRS, de service, SGSN, desservant l'UE.

7. Procédé selon les revendications 5 ou 6, dans lequel la libération de la connexion PDN sous-optimale comprend :
l'émission d'un message demandant une libération de la connexion PDN sous-optimale à un noeud de réseau ; et
la libération d'une ressource pour la connexion PDN sous-optimale.

8. Procédé selon la revendication 7, dans lequel la libération de la connexion PDN sous-optimale comprend en outre
la réception d'une réponse au message demandant la libération de la connexion PDN sous-optimale en provenance du noeud de réseau, et
dans lequel la ressource pour la connexion PDN sous-optimale est libérée lorsque la réponse au message demandant la libération de la connexion PDN sous-optimale est reçue.

9. Procédé selon la revendication 7, dans lequel la réponse au message demandant la libération de la connexion PDN sous-optimale est un message de suppression de demande de session comprenant un ID de support par défaut de la connexion PDN sous-optimale.

10. Procédé selon la revendication 1, dans lequel l'UE libère la connexion PDN sous-optimale lorsqu'il est reconnu qu'un transfert PS n'est pas supporté pendant une procédure CSFB ou SRVCC, et que la libération de la connexion PDN sous-optimale libère une ressource pour la connexion PDN sous-optimale.

11. Procédé selon la revendication 10, dans lequel l'UE émet en plus des informations demandant une libération de la connexion PDN sous-optimale lors de l'émission d'un message de suspension à un noeud de support de service général de radiocommunication par paquets, GPRS, de service, SGSN, desservant l'UE.

12. Entité de gestion de mobilité, MME, pour traiter un repli à commutation de circuits, CSFB, ou une continuité d'appel vocal radio unique, SRVCC, pendant un service de déchargement de trafic IP sélectionné ou de déchargement de trafic IP sélectionné coordonné, SIPTO/CSIPTO, la MME comprenant :
un émetteur-récepteur (103) ; et
un contrôleur (101) configuré pour :
établir une seconde connexion de Réseau public de données, PDN, pour un équipement utilisateur, UE, se déplaçant d'une première localisation à une seconde localisation, selon une utilisation du service SIPTO/CSIPTO après qu'une première connexion PDN pour l'UE est établie, dans laquelle la première connexion PDN est établie avec une première passerelle PDN, P-GW, qui est géographiquement la plus proche de la première localisation de l'UE, et la seconde connexion PDN est établie avec une seconde P-GW, qui est géographiquement la plus proche de la seconde localisation de l'UE,
après l'établissement de la seconde connexion PDN pour un service à courte durée de vie, maintenir la première connexion PDN pour garantir une continuité de service d'un service à longue durée de vie,
stocker des informations de contexte indiquant que la première connexion PDN est sous-optimale et qu'elle est liée à SIPTO/CSIPTO,
stocker des informations de contexte indiquant que la seconde connexion PDN est optimale et qu'elle est liée à SIPTO/CSIPTO,
lorsque CSFB ou SRVCC est demandé et qu'un transfert à commutation de paquets, PS, est supporté, sur la base des informations de contexte, désactiver la connexion PDN sous-optimale ; et
lorsque CSFB ou SRVCC est demandé et qu'un transfert à commutation de paquets, PS, n'est pas supporté, supprimer des informations sur la connexion PDN sous-optimale du contexte de l'UE stocké dans la MME.

13. MME selon la revendication 12,
dans laquelle le contrôleur est en outre configuré pour émettre, à un noeud de support de service général de radiocommunication par paquets, GPRS, de service, SGSN, desservant l'UE, des informations indiquant que la seconde connexion PDN est une connexion PDN optimale et est associée au service SIPTO/CSIPTO.

14. MME selon la revendication 12,
dans laquelle le contrôleur est en outre configuré pour libérer la connexion PDN sous-optimale lorsqu'un transfert PS n'est pas supporté pendant une procédure CSFB et ainsi un message de suspension de demande est reçu d'un noeud de support de service général de radiocommunication par paquets, GPRS, de service, SGSN, desservant l'UE, ou
dans laquelle le contrôleur est en outre configuré pour libérer la connexion PDN sous-optimale lorsqu'un transfert PS n'est pas supporté pendant une procédure SRVCC et ainsi un message de notification d'achèvement de SRVCC PS à CS est reçu du noeud de support de service général de radiocommunication par paquets, GPRS, de service, SGSN, desservant l'UE.

15. MME selon la revendication 14, dans laquelle le contrôleur, lors de la libération de la connexion PDN sous-optimale, est en outre configuré pour :
émettre un message demandant une libération de la connexion PDN sous-optimale à un noeud de réseau ; et
libérer une ressource pour la connexion PDN sous-optimale.
